# EUROPEAN PATENT SPECIFICATION

(11) **EP 0 707 627 B1**
(45) Date of publication and mention of the grant of the patent: **08.01.1997**
(21) Application number: 94922108.9
(22) Date of filing: 07.07.1994
(51) Int. Cl.: C11D 3/37, C08G 63/688

(54) **DETERGENT COMPOSITIONS COMPRISING SOIL RELEASE AGENTS**
SCHMUTZABWEISUNGSMITTEL ENTHALTENDE WASCHMITTELZUSAMMENSETZUNGEN
COMPOSITIONS DETERSIVES COMPRENANT AGENTS ANTISALISSURE

(30) Priority: 08.07.1993 US 88705; 17.09.1993 US 123486
(43) Date of publication of application: 24.04.1996
(73) Proprietor: THE PROCTER & GAMBLE COMPANY, Cincinnati, Ohio 45202 (US)
(72) Inventor: GOSSELINK, Eugene, Paul, Cincinnati, OH 45251 (US); PAN, Robert, Ya-Lin, Cincinnati, OH 45242 (US); HALL, Robin Gibson, Newcastle upon Tyne, N. Tyneside NE6 (GB)
(74) Representative: Gibson, Tony Nicholas
(86) International application number: US9407645
(87) International publication number: WO9502030

(56) References cited:
- EP-A- 0 311 342
- WO-A-92/04433
- GB-A- 2 240 983
- US-A- 4 721 580
- US-A- 4 764 289
- US-A- 4 818 569

## Description

### TECHNICAL FIELD

The present invention relates to anionic ester compositions useful as soil-releasing ingredients in fabric care compositions and processes, especially laundry detergents.

### CROSS REFERENCE TO RELATED APPLICATION

This application is a continuation-in-part of co-pending application Serial Number 08/088,705, filed July 8, 1993.

### BACKGROUND OF THE INVENTION

A wide variety of soil release agents (s.r.a.'s) for use in in-home fabric treatment processes such as laundering, fabric drying in hot air clothes dryers, and the like are known in the art. Various s.r.a.'s have been commercialized and are currently used in detergent compositions and fabric softener/antistatic articles and compositions. Such s.r.a.'s typically comprise an oligomer ester "backbone" and one or more "end-capping" units.

While nonionic s.r.a.'s are known in the literature, many of the commercially important s.r.a.'s are anionic. Such anionic s.r.a.'s typically comprise an oligoester backbone, which may itself optionally contain various anionic substituents, and will usually terminate with one or more end-capping units which are also anionic. For example, various oxyalkylene/terephthalate/sulfoiso- phthaloyl oligomers end-capped with sulfoaroyl substituents com- prise a known and important class of s.r.a.'s for use in laundry detergents and fabric conditioners.

Arguably, as between laundry detergents and fabric conditioners, the more difficult of consumer laundry products for the pur- pose of incorporating soil release agents are laundry detergents compositions, especially granular detergents. Compatibility re- quirements of soil release agents, especially with the alkaline, anionic detergent environments commonly present in such detergent compositions, provide a substantial technical challenge. Additionally, in contrast to the fabric conditioning environment in which certain s.r.a.'s have been used, a soil release agent in consumer laundry products will usually be exposed to various detersive ingredients, such as anionic surfactants, alkaline builders, and the like. Such chemicals may reduce the effectiveness of soil release agents, for example, by preventing their deposition on fabrics. The soil release agents may, reciprocally, reduce the laundry benefits of detersive ingredients. In a "thru-the-wash" mode, it is especially important that no formulation ingredient, including the soil release agent should promote redeposition of suspended soils in the laundry liquor; this would dull the appearance of the laundered fabrics.

Another consideration for manufacturers of detergent products is the cost to consumers. The manufacture of s.r.a.'s having sulfoaroyl end-caps is expensive due to the expense of the sulfoaroyl raw materials. Accordingly, it is of substantial interest to the manufacturers of ester-type s.r.a.'s to find a less expensive type of end-capping unit for use in detergent composi- tions. It would have appeared that isethionate-derived substituents of the type -OCH₂CH₂SO₃- might be ideal, and less expensive, substitutes for one or more of the sulfoaroyl end-capping units. This is particularly true since the parent molecule contains a terminal hydroxyl group which can undergo an esterification reaction with the oligomeric ester backbone of the s.r.a. However, it transpires that during synthesis of doubly end-capped s.r.a.'s with certain isethionate-derived end-capping units, substantial difficulties can occur due to undesirable crystallization of the s.r.a.'s, particularly those with backbones comprising large ratios of oxyethyleneoxy to oxy-1,2-propyleneoxy units. Also, melt viscosities can be undesirably high with certain combinations of backbone units and isethionate-derived end-capping units.

Further, it is also important, especially for detergent compositions, that the end-capping units be compatible with sulfoisophthaloyl backbone units. The use of sulfoisophthalate in the backbone stabilizes the ester and inhibits the desired amorphous form of the oligomer from converting to a less soluble crystalline form during processing, storage or use.

It has now been discovered that ethoxylated or propoxylated hydroxy-ethane and propane sulfonate end-capping units of the formula -(RO)ₙ(OCH₂CH₂)-(CH₂)ₘSO₃-, where R is ethylene or propylene or a mixture thereof, n is from 0 to 4 and m is 0 or 1, can be employed as a less expensive substitute for one or more of the sulfoaroyl end-caps in anionic s.r.a.'s having backbones comprising sulfoisophthaloyl units, terephthaloyl units, and oxyalkyleneoxy units without undesirable crystallization.

It has also now been discovered that the incorporation of ethoxylated phenolsulfonate end-capping units of the formula NaO₃S(C₆H₄)(RO)ₙ-, wherein n is from 1 to 5 and R is ethylene or propylene or a mixture thereof, and poly(oxyethylene)oxy units in the backbone or as modified end-capping units provide highly efficient s.r.a.'s. Further, these end-capping units are compatible with other s.r.a. units such as sulfoaroyl end-capping units, ethoxylated or propoxylated hydroxy-ethane and propane sulfonate end-capping units and sulfoisophthaloyl backbone units. The poly(oxyethylene)oxy units are believed to lower the melt viscosity of the ester oligomers as compared to other units such as isethionate-derived, sulfoaroyl or phenolsulfonate end- capping units. Choosing the level and type of poly(oxyethylene)oxy units as well as the choice of capping groups, especially mixtures of end-capping units, increases the stability of the amorphous form of the ester oligomer.

It is an object of the present invention to provide novel, less expensive s.r.a.'s with a mixture of end-capping units which can be used as effective and product-compatible soil release agents in consumer products such as granular detergent compositions.

These and other objects are secured herein as will be seen from the following disclosure.

### BACKGROUND ART

U.S. Patent 4,721,580, Gosselink, issued January 26, 1988, discloses soil release oligomeric esters and mixtures thereof with end-caps having the formula NaO₃S(CH₂CH₂O)ₙ- but with different backbone ester units from those of the present invention. See also U.S. Patent 4,968,451, Scheibel et al.

U.S. Patent 4,764,289, Trinh, issued August 16, 1988, discloses dryer-added fabric articles utilizing anionic polymeric soil release agents. See also U.S. Patent 4,818,569.

U.S. Patent 4,877,896, Maldonado et al, issued October 31, 1989, discloses end-capped esters useful as soil release agents in detergent compositions and fabric-conditioner articles comprising terephthalate esters.

Types of synthetic and analytical methods useful herein are well illustrated in Odian, Principles of Polymerization, Wiley, NY, 1981, which is incorporated herein by reference. Chapter 2.8 of the Odian reference, entitled "Process Conditions", pp 102-105, focuses on the synthesis of poly(ethylene terephthalate).

### SUMMARY OF THE INVENTION

The present invention encompasses detergent compositions comprising oligomeric, substantially linear, mixed end-capped esters and methods for their use. Said esters comprise a mixture of end-capping units and oxyalkyleneoxy units, terephthaloyl units, and sulfoisophthaloyl units. Preferred esters additionally comprise di(oxyethylene)oxy units and poly(oxyethylene)oxy units (with degree of polymerization of at least 3). (Mixtures of such esters with reaction by-products and the like retain their utility as fabric soil release agents when they contain at least about 10% by weight of said linear end-capped esters.) The esters herein are of relatively low molecular weight (i.e., generally below the range of fiber-forming polyesters) typically ranging from about 500 to about 8,000.

Taken in their broadest aspect, the s.r.a.'s provided by this invention encompass an oligomeric ester "backbone" which is end-capped with a mixture of units selected from ethoxylated or propoxylated hydroxy-ethane and propane sulfonate units, sulfoaroyl units, ethoxylated or propoxylated phenolsulfonate units, and modified poly(oxyethylene)oxy units.

The ethoxylated or propoxylated hydroxy-ethane and propane sulfonate end-capping units herein are anionic hydrophiles, derived from isethionate groups or ethoxylated 3-hydroxypropanesulfonate groups and connected to the esters by an ester linkage. The end-capping units are of the formula (MO₃S)(CH₂)ₘ(CH₂CH₂O)(RO)ₙ-, wherein M is a salt-forming cation such as sodium or tetraalkylammonium, R is ethylene or propylene or a mixture thereof, n is from 0 to 4, and m is 0 or 1.

The sulfoaroyl end-capping units are anionic hydrophiles, connected to the esters by means of aroyl groups. Preferred sulfoaroyl end-capping units are of the formula(MO₃S)(C₆H₄)C(O)-, wherein M is a salt-forming cation such as Na or tetraalkyl- ammonium.

The modified poly(oxyethylene)oxy monoalkyl ether units useful as end-capping units are represented by the formula XO(CH₂CH₂O)ₖ-, wherein X contains from about 1 to about 4 carbon atoms, preferably about 1 carbon atom, and k is from about 1 to about 100, preferably from about 3 to about 45, most preferably 16.

The ethoxylated phenolsulfonate end-capping units are represented by the formula NaO₃S(C₆H₄)(RO)ₙ-, wherein n is from 1 to 5, preferably from 1 to 3, most preferably 1 and R is ethylene or propylene or a mixture thereof.

Certain noncharged, hydrophobic aryldicarbonyl units are essential in the backbone unit of the oligoesters herein. Preferably, these are exclusively terephthaloyl units. Other noncharged, hydrophobic aryldicarbonyl units. such as isophthaloyl and even low levels of aliphatic dicarbonyl units such as adipoyl, can also be present if desired, provided that the soil release properties of the esters (especially polyester substantivity) are not significantly diminished.

Additionally, essential hydrophilic units are also incorporated into the backbone unit of the esters. For example, anionic hydrophilic units capable of forming two ester bonds may be used. Suitable anionic hydrophilic units of this specific type are well illustrated by sulfonated dicarbonyl units, such as sulfoisophthaloyl, i.e., -(O)C(C₆H₃)(SO₃M)C(O)-, wherein M is a salt-forming cation such as an alkali metal or tetradkylammonium ion.

Generally, if it is desired to modify the units of the esters, use of additional hydrophilic units is preferable to use of additional noncharged, hydrophobic units.

Thus, esters herein comprise, per mole of said ester:
i) from about 1 to about 2 moles of two or more types of end-capping units selected from the group consisting of:
   a) end-capping units of the formula (MO₃S)(CH₂)ₘ(CH₂- CH₂O)(RO)ₙ-, wherein M is a salt-forming cation suck as sodium or tetraalkylammonium, R is ethylene or propylene or a mixture thereof, m is 0 or 1, and n is from 0 to 4;
   b) sulfoaroyl units of the formula -(O)C(C₆H₄)(SO₃M),wherein M is a salt forming cation; and
   c) modified poly(oxyethylene)oxy monoalkyl ether units of the formula XO(CH₂CH₂O)ₖ-, wherein X contains from about 1 to about 4 carbon atoms, preferably about 1 carbon atom, and k is from about 1 to about 100;
   d) ethoxylated or propoxylated phenolsulfonate end- capping units of the formula NaO₃S(C₆H₄)(RO)ₙ-, wherein n is from 1 to 5 and R is ethylene or propylene or a mixture thereof;
ii) from about 0.5 to about 66 moles of units selected from the group consisting of:
   a) oxyethyleneoxy units;
   b) oxy-1,2-propyleneoxy units; and
   c) mixtures of a) and b);
iii) from 0 to about 50 moles of di(oxyethylene)oxy units;
iv) from 0 to about 50 moles of poly(oxyethylene)oxy units with a degree of polymerization of at least 3, preferably from about 3 to about 200, most preferably from about 3 to about 100;
v) from about 1.5 to about 40 moles of terephthaloyl units;
vi) from about 0.05 to about 26 moles of 5-sulfoisophthaloyl units of the formula-(O)C(C₆H₃)(SO₃M)C(O)-, wherein M is a salt forming cation such as in alkali metal or tetra- alkylammonium ion; such that the total of units ii), iii), and iv) ranges from about 0.5 to about 66 moles and such that no more than 50% by weight of the oligomeric ester is derived from the poly(oxyethylene)oxy units present in the backbone or in the end-capping units and such that the total of units iii) and iv) is no more than about 75% of the total of units ii), iii), and iv).

The ester "backbone" of the present soil release agent, by definition, comprises all the units other than the end-capping units; all the units incorporated into the esters being inter- connected by means of ester bonds. Thus, in one simple embodiment, the ester "backbones" comprise only terephthaloyl units, oxyethyl- eneoxy units, and 5-sulfoisophthaloyl units. In other preferred embodiments incorporating oxy-1,2-propyleneoxy units, the ester "backbone" comprises terephthaloyl units, 5-sulfoisophthaloyl units, oxyethyleneoxy, and/or oxy-1,2-propyleneoxy units; the mole ratio of the latter two types of units ranges from about 0.5:1 to about 10:1.

In still other embodiments, the ester "backbone" comprises di(oxyethylene)oxy units, terephthaloyl units, 5-sulfoisophthaloyl units, oxyethyleneoxy and\or oxy-1,2-propyleneoxy units, and, optionally, poly(oxyethylene)oxy units (with degree of polymerization of at least 3). The di(oxyethylene)oxy units will typically constitute from 0 to about 75, preferably from 0 to about 50, most preferably from 0 to about 25, mole percent of total oxyalkyleneoxy units per ester depending upon the length of the ester backbone with the hygher percentages being most applicable to soil release agents comprising longer backbones.

In yet still other embodiments, the ester "backbone" comprises terephthaloyl units, 5-sulfoisophthaloyl units, oxyethyleneoxy and\or oxy-1,2-propyleneoxy units, poly(oxyethylene)oxy units (with degree of polymerization of at least 3), and, optionally di(oxyethylene)oxy units. The poly(oxyethylene)oxy units, which aid in the rate of dissolution of the ester, will typically constitute from 0 to about 75, preferably from 0 to about 50, most preferably from 0 to about 25, mole percent of total oxyalkyleneoxy units per ester. The poly(oxyethylene)oxy backbone and end-capping units comprise no more than 50% by weight of the total weight of the oligomeric ester.

The soil release agents provided by the invention are well illustrated by one comprising from about 25% to about 100% by weight of ester having the empirical formula (CAP)ₓ(EG/PG)_{y'}(DEG)_{y"}(PEG)_{y'''}(T)_{z}(SIP)_{q}; wherein (CAP) represents said end-capping units i); (EG/PG) represents said oxyethyleneoxy and oxy-1,2-propyleneoxy units ii); (DEG) represents said optional di(oxyethylene)oxy units iii); (PEG) represents said optional poly(oxyethylene)oxy units iv); (T) represents said terephthaloyl units v); and (SIP) represents the sodium salt form of said 5-sulfoisophthaloyl units vi); x is from about 1 to about 2, preferably about 2; y'is from about 0.5 to about 66, preferably from about 2 to about 27; y" is from 0 to about 50, preferably from 0 to about 18; y"' is from 0 to about 50, preferably from 0 to about 12; y'+y"+y"' totals from about 0.5 to about 66; z is from about 1.5 to about 40, preferably from about 2.5 to about 25; and q is from about 0.05 to about 26, preferably from about 0.25 to about 15; wherein x, y', y", y"', z, and q represent the average number of moles of the corresponding units per mole of said ester. Excellent soil release agents are those wherein at least about 50% by weight of said ester has a molecular weight ranging from about 500 to about 5,000.

In a preferred embodiment, the soil release agents provided by the invention are illustrated by one comprising from about 25% to about 100% by weight of ester having the empirical formula (CAP)ₓ(EG/PG)_{y'}(T)_{z}(SIP)_{q}; wherein (CAP), (EG/PG), (T), and (SI) are as defined above; the oxyethyleneoxy:oxy-1,2-propyleneoxy mole ratio ranges from about 0.5:1 to about 10:1; x is about 2, y' is from about 2 to about 27, z is from about 2 to about 20, and q is about 0.4 to about 8. In the most highly preferred of these soil release agents, x is about 2, y' is about 5, z is about 5 and q is about 1.

In still other preferred embodiments, the soil release agents provided by the invention are illustrated by one comprising from about 25% to about 100% by weight of ester having the empirical formula (CAP)ₓ (EG/PG)_{y'}(DEG)_{y"}(T)_{z}(SIP)_{q}; wherein (CAP), (EG/PG), (T), and (SI) are as defined above; the oxyethyleneoxy:oxy-1,2-propyleneoxy mole ratio ranges from about 0.5:1 to about 10:1; x is about 2, y' is from about 2 to about 27, y" is from 0 to about 18, z is from about 2 to about 20, and q is about 0.4 to about 8. In the most highly preferred of these soil release agents, x is about 2, y' is about 5, y" is about 0.2, z is about 5, and q is about 1.

In the process aspect of the invention, the invention encompasses the preparation of the aforesaid (CAP)ₓ(EG/PG)_{y'}(DEG)_{y"}-(PEG)_{y"'}(T)_{z}(SIP)_{q} linear esters by a process most preferably comprising reacting dimethyl terephthalate, ethylene glycol and/or 1,2-propylene glycol, a dimethyl 5-sulfoisophthalate monovalent cation salt and a mixture of compounds selected from the group consisting of ethoxylated or propoxylated hydroxy-ethane or propane sulfonate monomers, monovalent cation salt of sulfobenzoic acid and its C₁-C₄ alkyl carboxylate esters, modified poly(oxyethylene)oxy monoalkyl ether unit of the formula XO(CH₂CH₂O)ₖ-, wherein X contains from about 1 to about 4 carbon atoms and k is from about 1 to about 100, and ethoxylated phenolsulfonate, sodium salt monomers. The resulting water-soluble or dispersible ester mixtures are used as fabric soil release materials. Optional reactants can be selected from the group consisting of diethylene glycol, triethylene glycol, tetraethylene glycol, polyethylene glycol and mixtures thereof.

The conventional detergent ingredients employed in fully- formulated detergent compositions provided herein can comprise at least 1%, preferably from about 1% to about 99.8%, most preferably from about 5% to about 80%, of a detersive surfactant. Optionally, detergent compositions can comprise at least 1%, preferably from about 5% to about 80%, of a detergent builder. Other optional detergent ingredients are also emcompassed by the fully-formulated detergent compositions provided by this invention. The soil release agents will typically constitute at least about 0.1%, preferably from about 0.1% to about 10%, most preferably from about 0.2% to about 3.0%, by weight of a detergent composition.

Methods of laundering fabrics and providing soil release finish thereto are also included in this invention. The preferred method of laundering involves contacting the fabrics with an aqueous wash liquor comprising at least about 300 ppm of a detergent composition which comprises conventional detergent ingredients and said soil release agent for about 5 minutes to about 1 hour. The fabrics can then be rinsed with water and line- or tumble- dried. Preferably, the liquor comprises from about 900 ppm to about 20,000 ppm of conventional detergent ingredients and from about 1 ppm to about 50 ppm, most preferably from about 2.5 to about 30 ppm, of the soil release agent.

All percentages, ratios, and proportions herein are on a weight basis unless otherwise indicated. All documents cited are incorporated herein by reference.

### DETAILED DESCRIPTION OF THE INVENTION

The present invention encompasses novel soil release agents and detergent compositions suitable for use in consumer fabric care products such as granular detergents. The essential component of the compositions is a particular kind of ester characterized by a mixture of certain essential end-capping units as well as other essential units all in particular proportions and having structural arrangements as described hereinafter.

The following structure is illustrative, but by no means limiting, of preferred structures of ester molecules of the invention:

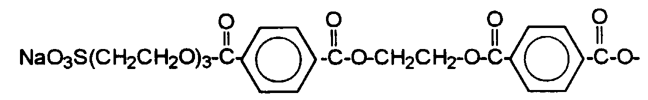

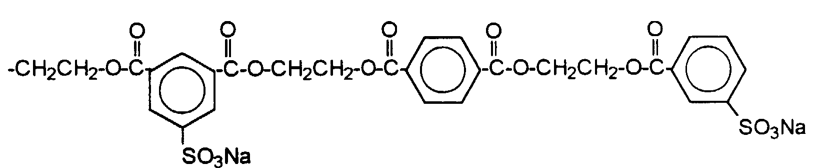

The esters herein can be simply characterized as oligomers which comprise a substantially linear ester "backbone" and end-capping units which are a mixture of ethoxylated or propoxylated hydroxy-ethane and propane sulfonate monomers, including 2-(2-hydroxyethoxy)ethanesulfonate or an ethoxylated 3-hydroxypropanesulfonate monomer such as 3-[2-(2-hydroxyethoxy)- ethoxy]propanesulfonate, a sulfoaroyl monomer such as sulfobenzoyl, an ethoxylated or propoxylated phenolsulfonate, and a modified poly(oxyethylene)oxy monoalkyl ether monomer, such as CH₃O(CH₂CH₂O)₁₆-H. Proper selection of the structural units which comprise the ester backbone and use of sufficient amounts of the end-capping units result in the desired soil release and physical properties of these materials.

Oligomeric Esters - It is to be understood that the soil release agents herein are not resinous, high molecular weight, macromolecular or fiber-forming polyesters but, instead, are relatively low molecular weight and contain species more appropriately described as oligomers rather than as polymers. Individual ester molecules herein, including the end-capping unit, can have molecular weights ranging from about 500 to about 8,000. Relevant for purposes of comparison with glycol-terephthalate fibrous polyesters (typically averaging 15,000 or more in molecular weight) is the molecular weight range from about 500 to about 5,000, within which molecules of the preferred esters of the invention which incorporate the essential units are generally found. Accordingly, the soil release agents of this invention are referred to as "oligomeric esters" rather than "polyester" in the colloquial sense of that term as commonly used to denote high polymers such as fibrous polyesters.

Molecular Geometry - The esters of the invention are all "substantially linear" in the sense that they are not significantly branched or crosslinked by virtue of the incorporation into their structure of units having more than two ester-bond forming sites. (By contrast, a typical example of polyester branching or crosslinking of the type excluded in defining esters of the present invention, see Sinker et al, U.S. Patent 4,554,328, issued November 19, 1985.) Furthermore, no cyclic esters are essential for the purposes of the invention but may be present in the compositions of the invention at low levels as a result of side-reactions during ester synthesis. Preferably, cyclic esters will not exceed about 2% by weight of the soil release agents; most preferably, they will be entirely absent from the agents.

Contrasting with the above, the term "substantially linear" as applied to the esters herein does, however, expressly encompass materials which contain side-chains which are unreactive in ester-forming or transesterification reactions. Thus, oxy-1,2propyleneoxy units are of an unsymmetrically substituted type; their methyl groups do not constitute what is conventionally regarded as "branching" in polymer technology (see Odian, Principles of Polymerization, Wiley, N.Y., 1981, pages 18-19, with which the present definitions are fully consistent) and are unreactive in ester-forming reactions. Optional units in the esters of the invention can likewise have side-chains, provided that they conform with the same nonreactivity criterion.

Molecular Structures - The following structures are illustrative of structures of ester molecules falling within the foregoing preferred embodiments, and demonstrate how the units are connected:
a) double end-capped ester molecule comprised of essential units i), ii), v) and vi); 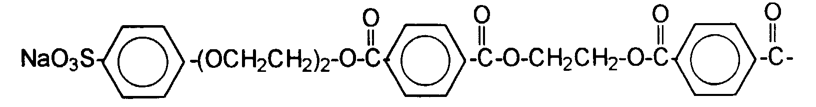 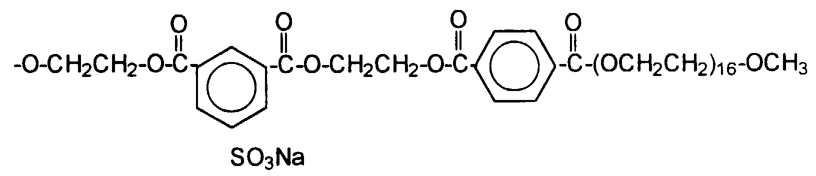
b) doubly end-capped ester molecule, (termed a "hybrid backbone" ester molecule herein) comprised of essential units i), ii), v) and vi) and an oxydiethyeneoxy unit iii). Units ii) are a mixture of oxyethyleneoxy and oxy-1,2-propyleneoxy units, in the example shown below at a 2:1 mole ratio (on average in ester compositions as a whole, in contrast to individual molecules such as illustrated here, ratios ranging from about 0.5:1 to about 10:1 are preferred);

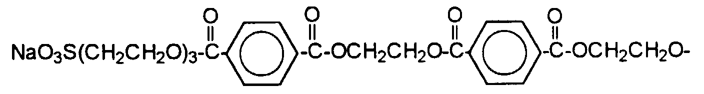

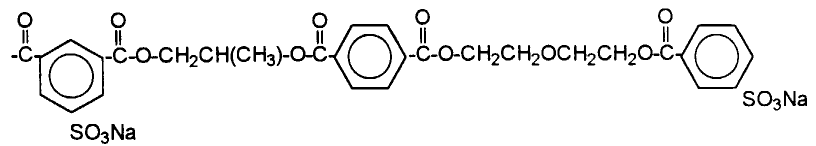

In the context of the structures of ester molecules disclosed herein, it should be recognized that the present invention encompasses not only the arrangement of units at the molecular level but also the gross mixtures of esters which result from the reaction schemes and which have the desired range of composition and properties. Accordingly, when the number of monomer units or ratios of units are given, the numbers refer to an average quantity of monomer units present in oligomers of the soil release agent.

Groups at the Termini of the Ester Backbone - The "esters of this invention" is a term which encompasses the novel doubly or singly end-capped compounds disclosed herein and mixtures of said end-capped materials which may unavoidably contain some non-capped species. Although, levels of the latter will be zero or at a minimum in all of the highly preferred soil release agents. Thus, when referring simply to an "ester" herein, it is furthermore intended to refer, by definition, collectively to the mixture of capped and uncapped ester molecules resulting from any single preparation.

End-Capping Units - The end-capping units used in the esters of the present invention are mixtures of ethoxylated or propoxy- lated hydroxy-ethane and propanesulfonate groups, sulfoaroyl groups, modified poly(oxyethylene)oxy units, and ethoxylated or propoxylated phenolsulfonate units.

It is not intended to exclude the acid form, but most generally the esters herein are used as sodium salts, as salts of other alkali metals, as salts with nitrogen-containing cations (especially tetraalkylammonium), or as the disassociated ions in an aqueous environment.

Examples of ethoxylated or propoxylated hydroxy-ethane and propanesulfonate end-capping groups include sodium isethionate, sodium 2-(2-hydroxyethoxy)ethanesulfonate, sodium 2-[2-(2-hydroxyethoxy)ethoxy]ethanesulfonate, sodium 2-{2-[2-(2-hydroxyethoxy)ethoxy]ethoxy}ethanesulfonate, sodium 2-{2-[2-(2-{2-hydroxyethoxy}ethoxy)ethoxy]ethoxy}ethanesulfonate, 3-[2-(2-hydroxyethoxy)ethoxy]propanesulfonate, and sodium alpha-3-sulfo-propyl-omega-hydr- oxypoly(oxy-1,2-ethanediyl], with average degree of ethoxylation of 2-4, and mixtures thereof.

Preferred sulfoaroyl end-capping units are of the formula (MO₃S)(C₆H₄)C(O)-, particularly the ortho and meta isomers, wherein M is a salt-forming cation such as Na or tetraalkylammonium. Examples of preferred modified poly(oxyethylene)oxy monoalkyl ether units include poly(ethylene glycol, methyl ether), poly(ethylene glycol, ethyl ether), and tetraethylene glycol, monomethyl ether. Examples of ethoxylated phenolsulfonate units include sodium 4-(2- hydroxyethoxy)benzenesulfonate. sodium 4-(2-hydroxypropoxy)benzene- sulfonate and sodium 4-(2-[2-hydroxyethoxy]ethoxy)benzenesulfonate.

Monoethers of poly(oxyethylene)oxy units will have a wide range of volatility, inversely proportional to their molecular weight. Units with a degree of oligomerization of 5 or less will partially volatilize during the vacuum condensation step, whereas oligomers with a degree of oligomerization of over 5 will behave primarily as nonvolatiles.
Consequently, when synthesizing oligomer esters with end-capping units comprising poly(oxyethyl- ene)oxy units with a degree of oligomerization of 5 or less, an excess of polyethylene glycol, monoalkyl ether must be used to compensate for the losses arising from the volatility.

Ester Backbone - As illustrated in the structures shown above, in the esters of this invention, the backbone is formed by 5-sulfo- isophthaloyl units, terephthaloyl units, oxyethyleneoxy and/or oxy- propyleneoxy units and, optionally, di(oxyethylene)oxy units and poly(oxyethylene)oxy units connected with alternation of the aryldicarbonyl and oxyalkyleneoxy units.

Symmetry - It is to be appreciated that in esters in which oxy-1,2-propyleneoxy units are also present, the oxy-1,2-propyl- eneoxy units can have their methyl groups randomly alternating with one of the adjacent -CH₂- hydrogen atoms, thereby lowering the symmetry of the ester chain. Thus, the oxy- 1,2-propyleneoxy unit can be depicted as having either the -OCH₂CH(CH₃)O- orientation or as having the opposite -OCH(CH₃)CH₂O- orientation. Carbon atoms in the oxy-1,2-propylene units to which the methyl groups are attached are, furthermore, asymmetric, i.e., chiral; they have four nonequivalent chemical entities attached.

It should also be noted that the essential non-charged aryldicarbonyl units herein need not exclusively be terephthaloyl units provided that the polyester-fabric-substantivity of the ester is not harmed to a significant extent. Thus, for example, minor amounts of isomeric non-charged dicarbonyl units, isophthaloyl or the like, are acceptable for incorporation into the esters.

Di(oxyethylene)oxy Units - Optional di(oxyethylene)oxy units are preferably present when the backbone unit comprises 8 or more terephthaloyl units; however, at least some di(oxyethylene)oxy units may be present in esters with as few as 1.5 terephthaloyl units.

Poly(oxyethylene)oxy Units - The total average weight percent of poly(oxyethylene)oxy units in the soil release agent composition can be balanced to give acceptable melt viscosity (i.e., below about 40,000 cPs at 230°C and below about 160,000 cPs at 200°C) while maintaining the desirable physical properties of the agent below about 50°C. Typically, the total average weight percent is about 1 to about 25 percent for anionic soil release agent compositions having an average of about 2.5 to about 5 anionic units per ester.

The amount of poly(oxyethylene)oxy units permissible in the backbone is related to its degree of polymerization. For example, oxyethyleneoxyethyleneoxyethyleneoxy units (formed from triethylene glycol), which have a degree of polymerization of three, can constitute from 0 to 75 mole percent of the total oxyalkyleneoxy units in the backbone. In another example, poly(oxyethylene)oxy units derived from PEG-600. with a degree of oligomerization of about 13, can constitute from 0 to about 50 mole percent of the total oxyalkyleneoxy units present in the backbone. Longer poly(oxyethylene)oxy units, such as those derived from PEG-2000 with a degree of oligomerization of about 45, can constitute from 0 to about 20 mole percent of the total oxyalkyleneoxy units in the backbone. In general, for best soil release properties across a variety of detergent formulations, it is best to minimize the amount of poly(oxyethylene)oxy units in the ester to the amount necessary to achieve the desired melt viscosity. Also, in general, it is preferrable to incorporate poly(oxyethylene)oxy units in the capping groups rather than in the backbone. Additionally, the amount of poly(oxyethylene)oxy units must be selected to avoid over promotion of backbone segment crystallization during cooling or subsequent storage or use. This is particularly important when a high proportion of the oxyalkyleneoxy units are oxyethyleneoxy.

Method for Making End-Capped Esters - The ester soil release agents of the present invention can be prepared using any one or combination of several alternative general reaction types, each being well-known in the art. Many different starting materials and diverse, well-known experimental and analytical techniques are useful for the syntheses. Mechanistically, the suitable general reaction types for preparing esters of the invention include those classifiable as:
1. alcoholysis of acyl halides;
2. esterification of organic acids;
3. alcoholysis of esters (transesterification); and
4. reaction of alkylene carbonates with organic acids.

Of the above, reaction types 2-4 are highly preferred since they render unnecessary the use of expensive solvents and halogenated reactants. Reaction types 2 and 3 are especially preferred as being the most economical.

Suitable starting materials or reactants for making the esters of this invention are any reactants (especially esterifiable or transesterifiable reactants) that are capable of combining in accordance with the reaction types 1-4, or combinations thereof, to provide esters having the correct proportions of all the above- specified units (i) to (iv) of the esters. Such reactants can be categorized as "simple" reactants, i.e., those that are singly capable of providing only one kind of unit necessary for making the esters, or as derivatives of the simple reactants which singly contain two or more different types of unit necessary for making the esters. Illustrative of the simple kind of reactant is dimethyl terephthalate which can provide only terephthaloyl units. In contrast, bis(2-hydroxypropyl)terephthalate is a reactant that can be prepared from dimethyl terephthalate and 1,2-propylene glycol and which can desirably be used to provide two kinds of unit, viz. oxy-1,2propyleneoxy and terephthaloyl, for making the esters herein.

In principle it is also possible to use oligoesters, or polyesters such as poly(ethylene terephthalate), as reactants herein and to conduct transesterification with a view to incorporation of end-capping units while decreasing molecular weight. Nonetheless, the more highly preferred procedure is to make the esters from the simplest reactants in a process involving molecular weight increase (to the limited extent provided for by the invention) and end-capping.

Since "simple" reactants are those which will most preferably and conveniently be used, it is useful to illustrate this kind of reactant in more detail. Thus, 2-[2-(2-hydroxyethoxy)ethoxy]- ethanesulfonate can be used as the source of one of the essential end-capping units herein. Note that the metal cation can be replaced by potassium or a nitrogen-containing cation provided that the latter does not overly promote crystallization of the oligomer and is unreactive during the synthesis, e.g. tetraalkylammonium. It is, of course, possible to subject any of the esters of the invention to cation exchange after the synthesis and, thereby, afford a means of introducing more esoteric or reactive cations into the ester compositions.

Appropriate glycols or cyclic carbonate derivatives thereof can be used to provide oxy-1,2-alkyleneoxy units; thus, 1,2- propylene glycol or (where the starting carboxyl groups are present in an acidic form) the cyclic carbonate 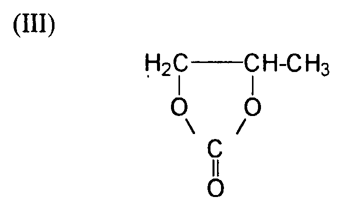 are suitable sources of oxy-1,2-propyleneoxy units for use herein.

Oxyethyleneoxy units are most conveniently provided by ethylene glycol. Although, as an alternative, ethylene carbonate could be used when free carboxylic acid groups are to be esterified. Oxydiethyleneoxy units are most conveniently provided by diethylene glycol. Poly(oxyethylene)oxy units are most conveniently provided by triethylene glycol, tetraethylene glycol, higher polyethylene glycols, and mixtures thereof. Additionally, minor amounts of poly(oxyethylene)oxy may be formed as a side reaction in the ester synthesis.

Aryldicarboxylic acids or their lower alkyl esters can be used to provide the essential aryldicarbonyl units; thus, terephthalic acid or dimethyl terephthalate are suitable sources of terephthaloyl units.

Other units of the esters will be provided by well-known and readily identifiable reagents; for example, dimethyl 5-sulfoiso- phthalate is an example of a reagent capable of providing 5-sulfo- isophthaloyl units for optional incorporation into the esters of the invention. It is generally preferred that all units of the type (vi) as defined hereinabove should be provided by reactants in ester or dicarboxylic acid forms.

When starting with the simplest reactants as illustrated above, the overall synthesis is usually multi-step and involves at least two stages, such as an initial esterification or transesterification (also known as ester interchange) stage followed by an oligomerization stage in which molecular weights of the esters are increased, but only to a limited extent as provided for by the invention.

Formation of ester-bonds in reaction types 2 and 3 involves elimination of low molecular weight by-products such as water (reaction 2) or simple alcohols (reaction 3). Complete removal of the latter from reaction mixtures is generally somewhat easier than removal of the former. However, since the ester-bond forming reactions are generally reversible, it is necessary to "drive" the reactions forward in both instances by removing these by-products.

In practical terms, in the first stage (ester interchange) the reactants are mixed in appropriate proportions and are heated to provide a melt at atmospheric or slightly superatmospheric pressures (preferably of an inert gas such as nitrogen or argon). Water and/or low molecular weight alcohol is liberated and is distilled from the reactor at temperatures up to about 200°C. (A temperature range of from about 150-200°C is generally preferred for this stage).

In the second (i.e., oligomerization) stage, vacuum and temperatures somewhat higher than in the first stage are applied; removal of volatile by-products and excess reactants continues until the reaction is complete, as monitored by conventional spectroscopic techniques. Continuously applied vacuum, typically of about 10 mm Hg or lower can be used.

In both of the above-described reaction stages, it is necessary to balance on one hand the desire for rapid and complete reaction (higher temperatures and shorter times preferred), against the need to avoid thermal degradation (which undesirably might result in off-colors and by-products). It is possible to use generally higher reaction temperatures especially when reactor design minimizes super-heating or "hot spots"; also, ester-forming reactions in which ethylene glycol is present are more tolerant of higher temperatures. Thus, a suitable temperature for oligomerization lies most preferably in the range of from about 150°C to about 260°C when higher ratios of EG/PG are present and in the range of from about 150°C to about 240°C when lower ratios of EG/PG are present (assuming that no special precautions, such as of reactor design, are otherwise taken to limit thermolysis). When tetraalkylammonium cations are present, condensation temperatures are preferably 150-240°C.

It is very important in the above-described procedure to use continuous mixing so that the reactants are always in good contact; highly preferred procedures involve formation of a well-stirred homogeneous melt of the reactants in the temperature ranges given above. It is also highly preferred to maximize the surface area of reaction mixture which is exposed to vacuum or inert gas to facilitate the removal of volatiles, especially in the oligomerization step; mixing equipment of a high-shear vortex-forming type giving good gas-liquid contact are best suited for this purpose.

Catalysts and catalyst levels appropriate for esterification, transesterification, oligomerization, and for combinations thereof are all well-known in polyester chemistry, and will generally be used herein; as noted above, a single catalyst will suffice. Suitably catalytic metals are reported in Chemical Abstracts, CA83:178505v, which states that the catalytic activity of transition metal ions during direct esterification of K and Na carboxybenzenesulfonates by ethylene glycol decreases in the order Sn (best), Ti, Pb, Zn, Mn, Co (worst).

The reactions can be continued over periods of time sufficient to guarantee completion, or various conventional analytical monitoring techniques can be employed to monitor progress of the forward reaction; such monitoring makes it possible to speed up the procedures somewhat and to stop the reaction as soon as a product having the minimum acceptable composition is formed. In general, when tetraalkylammonium cations are present, it is preferred to stop the reaction at less than full completion, relative to the sodium cation form, to reduce the possibility of thermal instability.

Appropriate monitoring techniques include measurement of relative and intrinsic viscosities, hydroxyl numbers, ¹H and ¹³C nuclear magnetic resonance (n.m.r) spectra, capillary zone electrophoresis, and liquid chromatograms.

Most conveniently, when using a combination of volatile reactants (such as a glycol) and relatively involatile reactants (such as dimethyl terephthalate), the reaction will be initiated with excess glycol being present. As in the case of ester inter- change reactions reported by Odian (op. cit.), "stoichiometric balance is inherently achieved in the last stages of the second step of the process". Excess glycol can be removed from the reaction mixture by distillation; thus, the exact amount used is not critical.

Inasmuch as the final stoichiometry of the ester composition depends on the relative proportions of reactants retained in the reaction mixtures and incorporated into the esters, it is desirable to conduct the condensations in a way which effectively retains the non-glycol reactants and prevents them from distilling or subliming. Dimethyl terephthalate and to a lesser extent the simple glycol esters of terephthalic acid have sufficient volatility to show on occasion "sublimation" to cooler parts of the reaction apparatus. To ensure achieving the desired stoichiometry, it is desirable that this sublimate be returned to the reaction mixture or, alternatively, that sublimation losses be compensated by use of a small excess of terephthalate. In general, sublimation-type losses, such as of dimethyl terephthalate, may be minimized 1) by apparatus design; 2) by raising the reaction temperature slowly enough to allow a large proportion of dimethyl terephthalate to be converted to less volatile glycol esters before reaching the upper reaction temperatures; 3) by conducting the early phase of the transesterification under low to moderate pressure (especially effective is a procedure allowing sufficient reaction time to evolve at least about 90% of the theoretical yield of methanol before applying vacuum); 4) by controlling vacuum during condensation to avoid use of pressures below about 20 mm Hg until the condensation has progressed to the point that most of the terephthalate is beyond the monomeric stage. On the other hand, the "volatile" glycol components used herein must be truly volatile if an excess is to be used. In general, lower glycols or mixtures thereof having boiling points below about 350°C at atmospheric pressure are used herein; these are volatile enough to be practically removable under typical reaction conditions.

Typically herein, when calculating the relative molar proportions of reactants to be used, the following routine is followed, as illustrated for a combination of the reactants sodium 2-[2-(2-hydroxyethoxy)ethoxy]ethanesulfonate (A), ethylene glycol (B), dimethyl terephthalate (C), dimethyl 5-sodiosulfoisophthalate (D), and poly(ethylene glycol, methyl ether), MW 750 (E):
1. the desired degree of end-capping is selected; for the present example, the value 2 is used;
2. the ratio of caps (A) to (E) is selected; for the present example, the ratio of 4:1 is selected;
3. the average calculated number of terephthaloyl units in the backbone of the desired ester is selected; for the present example, the value 5, which falls in the range of most highly preferred values according to the invention, is used;
4. the average calculated number of 5-sulfoisophthaloyl units in the backbone of the desired ester is selected; for the present example, the value 1, which falls in the range of most highly preferred values according to the invention, is used;
5. the mole ratio of (A) to (C) to (D) to (E) should thus be 1.6:5:1:0.4; amounts of the reactants (A), (C), (D), and (E) are taken accordingly;
6. an appropriate excess of glycol is selected; typically 2 to 10 times the sum of the number of moles of dimethyl sulfoisophthalate and dimethyl terephthalate is suitable.

The glycol used will be calculated in an amount sufficient to allow interconnection of all other units by means of ester bonds. Adding a convenient excess will usually result in a total relative amount of glycol ranging from about 1 to about 10 moles for each mole nonglycol organic reactants added together.

Soil release agents which comprise doubly end-capped esters may undergo undesirable crystallization during synthesis or when introduced into the wash liquor, particularly if the oxyethylene- oxy:oxy-1,2-propyleneoxy ratio is greater than 2:1. A sulfonate- type hydrotrope or stabilizer, such as alkylbenzenesulfonate or toluenesulfonate, may be mixed with the reactants during synthesis of the ester (or admixed with molten ester) to reduce the crystallization problem. Typically about 0.5% to about 20%, by weight of soil release agent, of sulfonate-type stabilizer is added to the soil release agent.

The following describes typical syntheses of the soil release agents herein.

### EXAMPLE I

Synthesis of sodium 2-[2-(2-hydroxyethoxy)ethoxy]ethanesul- fonate- To a 1L, three neck, round bottom flask equipped with a magnetic stirring bar, modified Claisen head, condenser (set for distillation), thermometer, and temperature controller (Therm-O- Watch^{TM}, I²R) is added isethionic acid, sodium salt (Aldrich, 100.0g, 0.675 mol) and distilled water (∼90 ml). After dissolution, one drop of hydrogen peroxide (Aldrich, 30% by wt. in water) is added to oxidize traces of bisulfite. The solution is stirred for one hour. A peroxide indicator strip shows a very weak positive test. Sodium hydroxide pellets (MCB, 2.5g, 0.0625 mol) are added, followed by diethylene glycol (Fisher, 303.3g, 2.86 mol). The solution is heated at 190°C under argon overnight as water distills from the reaction mixture. A ¹³C-NMR(DMSO-d₆) shows that the reaction is complete by the disappearance of the isethionate peaks at ∼53.5 ppm and ∼57.4 ppm. The solution is cooled to near room temperature and neutralized to pH 7 with 57.4g of a 16.4% solution of p-toluenesulfonic acid monohydrate in diethylene glycol. The ¹³C-NMR spectrum of the product shows resonances at ∼51 ppm (-CH₂SO₃Na), ∼60 ppm (-CH₂OH), and at ∼69 ppm, ∼72 ppm, and ∼77 ppm for the remaining four methylenes. Small resonances are also visible for the sodium p-toluenesulfonate which formed during neutralization. The reaction affords 451g of a 35.3% solution of sodium 2-[2-(2-hydroxyethoxy)ethoxy]ethanesulfonate in diethylene glycol. The excess diethylene glycol is removed by adding 0.8 mol% of monobasic potassium phosphate (Aldrich) as a buffer and heating on a Kugelrohr apparatus (Aldrich) at 150°C for ∼3 hrs at ∼1 mm Hg to give the desired sodium 2-[2-(2-hydroxyeth- oxy)ethoxy]ethanesulfonate as an extremely viscous oil or glass.

### EXAMPLE II

Synthesis of sodium alpha-3-sulfopropyl-omega-hydroxy-poly- (oxy-1,2-ethanediyl) (with average degree of ethoxylation of 3) - To a 500 ml, three-neck round bottom flask equipped with a stirrer and condenser is added sodium bisulfite (Baker, 70.1 g, 0.675 mol) and 250 ml of water. After all of the salt has dissolved, sodium hydroxide is added (Aldrich, 6.24 g, 0.156 mol), followed by alpha-2-propenyl-omega-hydroxy-poly(oxy-1,2-ethanediyl) (100.0 g, 0.526 mol with average degree of ethoxylation of 3) (made by ethoxylating allyl alcohol to an average degree of about 2.6 followed by stripping of unethoxylated allyl alcohol), sodium persulfate (Aldrich, 6.4g, 0.027 mol), and iron sulfate heptahydrate (Aldrich, 0.15 g, 0.00054 mol), respectively. After the solution has been stirring for two hours, an additional 7.3g (0.031 mol) of sodium persulfate is added, and the solution is stirred overnight at room temperature. A ¹³C-NMR(D₂O) shows the presence of residual peaks for allyl ethoxylate at ∼117 ppm and ∼134.5 ppm. An additional 6.3g (0.026 mol) of sodium persulfate is added. The solution turns red at this point, and the pH decreases to ∼3. The reaction mixture is adjusted to about pH 7 with sodium hydroxide (50% in water) and is stirred for an additional 3 hours. A ¹³C-NMR(D₂O) shows the completeness of the reaction by the disappearance of the allyl ethoxylate peaks and the emergence of product peaks at ∼24.6 ppm (CH₂CH₂SO₃Na) and ∼48.2 ppm (CH₂SO₃Na), and with the retention of the peak at ∼60.8ppm (CH₂OH). Small peaks for sulfinate-sulfonate functionality [-OCH₂CH(SO₂Na)CH₂- SO₃Na] are also visible at ∼44.4 ppm and ∼62.9 ppm. Hydrogen peroxide (Aldrich, 39.7 g of a 30% solution in water, 0.35 mol) is added to the solution to oxidize the small amount of sulfinate-sulfonate to a disulfonate and the excess bisulfite to bisulfate. The solution becomes acidic (pH∼5) and is neutralized with sodium hydroxide. The solution is stirred overnight at room temperature. A ¹³C-NMR(D₂O) shows that the small sulfinate- sulfonate peak at ∼44.3 ppm disappears, and a small disulfonate peak at ∼56.9 ppm appears. Peroxide indicator paper shows an excess of hydrogen peroxide. A small amount of platinum (IV) oxide is added, and the solution is stirred at room temperature for three days to decompose the excess peroxide. The reaction mixture is then gravity filtered and water is removed under aspirator vacuum on a rotary evaporator at ∼60°C to precipitate the inorganic salts. Methanol (∼1 volume) is added with mixing to form a slurry and the mixture is filtered. The filtrate is heated on the rotary evaporator at ∼60°C for 4 hours to afford about 125g of the desired sulfopropanol triethoxylate as a white for waxy solid. It is used without further purification as a capping monomer for preparation of polymers.

### EXAMPLE III

Synthesis of 4-(2-Hydroxyethoxy)Benzenesulfonic Acid, Sodium Salt - A 200 g portion of water is added to a glass liner for a rocking autoclave along with 4-hydroxybenzenesulfonic, acid sodium saLt dihydrate (Aldrich, 100 g, 0.43 mol) and sodium hydroxide (Mallinckrodt, 1.7 g, 0.042 mol). This is placed in a rocking autoclave, and the temperature is raised to 90°C. Ethylene oxide (Wright Bro., 22.7 g, 0.51 mol) is then added in small increments under pressure over about a 10 minute period. The temperature is maintained at about 90°C for an additional 70 minutes, and the system is allowed to cool. NMR analysis of the resulting product shows that it is predominantly 4-(2-hydroxyethoxy)benzenesulfonic acid, sodium salt as evidenced by ¹³C-NMR(D20) peaks at about 59.3 (CH₂OH), 69.2 (OCH₂CH₂OH). The aromatic ring carbon resonances at 114.1, 126.8, 134.3, and 159.8 ppm. A resonance at 62.2 ppm indicates some ethylene glycol is formed. The crude product is exhaustively stripped on a Kugelrohr apparatus (Aldrich) at 140°C and 1 mm Hg for 2 hours to give product which is free of ethylene glycol. This material is examined by 1H-NMR (pH 10 D20). Large peak multiplets are found at 3.75(2H), 3.93(2H), 6.90(2H), 7.63(2H) for the desired product. Very small doublets at about 6.53 and 7.43 corresponded to about 2% of unreacted 4-hydroxybenzenesulfonic acid, (disodium salt at the high pH). Tiny multiplets at 3.5-3.6 ppm indicate the presence of traces of more highly ethoxylated homologs of the desired material. The crude material may be used as such or further purified before use as a capping monomer.

Alternatively, the 4-(2-hydroxyethoxy)benzenesulfonic acid, monosodium salt is made by heating a solution of 4-hydroxybenzene- sulfonic acid, monosodium salt dihydrate (0.43 mol), sodium hydrox- ide (0.43 mol), and 2-chloroethanol (Aldrich, 0.6 mol) in 150 ml water under reflux over night. The cooled reaction mixture is extracted with methylene chloride, and the aqueous layer is concen- trated and cooled to separate the 4-(2-hydroxyethoxy)benzenesul- fonic acid, monosodium salt as crystals.

### EXAMPLE IV

Synthesis of an Oligomer of Sodium 2-(2-Hydroxyethoxy)ethanesulfonate, Dimethyl Terephthalate, Sodio 2-(4-Sulfophenoxy)ethanol, Dimethyl 5-Sodiosulfoisophthalate, and Ethylene Glycol - To a 100 ml, three neck, round bottom flask equipped with a magnetic stirring bar, modified Claisen head, condenser (set for distil- lation), thermometer, and temperature controller (Therm-O-Watch, I²R) is added sodium 2-(2-hydroxyethoxy)ethane sulfonate (3.2 g, 0.0169 mol), dimethyl terephthalate (16.4 g, 0.0844 mol), sodio 2-(4-sulfophenoxy)ethanol (4.1 g, 0.0169 mol) (prepared as in Example III), dimethyl 5-sulfoisophthalate, sodium salt (Aldrich, 5.0 g, 0.0169 mol), ethylene glycol (Baker, 29.9 g, 0.482 mol), hydrated monobutyltin oxide (M&T Chemicals, 0.12 g, 0.2% of total reaction weight), and sodium acetate (MCB, 0.03 g 2 mol% relative to dimethyl 5-sulfoisophthalate, sodium salt). This mixture is heated to 180°C and maintained at that temperature overnight under argon as methanol and water distill from the reaction vessel. A ¹³C-NMR(DMSO-d₆) shows this stage of the reaction to be complete by the disappearance of the resonance for methyl esters at ∼52 ppm. The material is transferred to a 500 ml. single neck. round bottom flask and heated gradually over about 20 minutes to 240°C in a Kugelrohr apparatus (Aldrich) at about 1.5 mm Hg and maintained there for 1 hour. The reaction flask is then allowed to air cool quite rapidly to near room temperature under vacuum (∼30 min.). A ¹³C-NMR(DMSO-d₆) shows that the reaction is complete by the virtual disappearance of the resonance at ∼59 ppm corresponding to intermediate monoesters of ethylene glycol and by the presence of a sizable resonance at ∼63 ppm, assigned to the diesters of ethylene glycol. Resonances associated with the capping groups are also present. The reaction affords 26.9 g of the desired oliogomer as an orange glass. The solubility is tested by weighing a small amount of material into a vial, adding enough distilled water to make a 5% by weight solution, and agitating the vial vigorously. The material almost all dissolves under these conditions.

### EXAMPLE V

Synthesis of an Oligomer of Poly(ethylene glycol, methyl ether), MW=750, Sodium 2-(2-Hydroxyethoxy)ethanesulfonate, Dimethyl 5-Sulfoisophthalate, Sodium Salt, Ethylene Glycol, and Propylene Glycol - To a 250ml, three neck, round bottom flask equipped with a magnetic stirring bar, modified Claisen head, condenser (set for distillation), thermometer, and temperature controller (Therm-O- Watch^{TM}, I²R) is added poly(ethylene glycol, methyl ether), MW=750 (Aldrich, 15.5g, 0.021 mol), sodium 2-(2-hydroxyethoxy)ethanesul- fonate (15.8g, 0.082 mol, prepared as in Example I), dimethyl terephthalate (50.0g, 0.257 mol), dimethyl 5-sulfoisophthalate, sodium salt (Aldrich, 15.3g, 0:052 mol), ethylene glycol (Baker, 47.9g, 0.773 mol), propylene glycol (Baker, 52.9g, 0695 mol), hydrated monobutyltin oxide (M&T Chemicals, 0.39g, 0.2% of total reaction weight), sodium acetate (MCB, 0.08g, 2 mol% of dimethyl 5-sulfoisophthalate, sodium salt), sodium cumenesulfonate (Ruetgers-Nease, 4.0g, 4% of final polymer wt.), sodium xylene- sulfonate (Ruetgers-Nease, 4.0g, 4% of final polymer wt., and sodium toluenesulfonate (Ruetgers-Nease, 4.0g, 4% of final polymer wt.). This mixture is heated to 180°C and maintained at that temperature overnight under argon as methanol and water distill form the reaction vessel. The material is transferred to a 1000ml, single neck, round bottom flask and heated gradually over about 20 minutes to 240°C in a Kugelrohr apparatus (Aldrich) at about 1.5mm Hg and maintained there for 3 hours. The reaction flask is then allowed to air cool quite rapidly to near room temperature under vacuum (approximately 30 min.) The reaction affords 99g of the desired oligomer as a tan solid. A ¹³C-NMR (DMSO-d₆) shows a resonance for-C(O)OCH₂CH₂O(O)C- at ∼63.2 ppm (diester). A resonance for -C(O)OCH₂CH₂OH at ∼59.4 ppm (monoester) is not detectable and is a least 28 times smaller than the diester peak. Resonances at ∼51.0 ppm representing the sulfoethoxy capping group (-CH₂SO₃Na) and at ∼58 ppm representing the methyl ether (-CH₂OCH₃) are also present. A ¹H-NMR(DMSO-d₆) shows a resonance at ∼8.4 ppm representing the sulfoisophthalate aromatic hydrogens and a resonance at ∼7.9 ppm representing terephthalate aromatic hydrogens. The ratio of the peak for the methylene groups of diesters of ethylene glycol at ∼4.7 ppm to the area of the peak for the methyne proton of diesters of propylene glycol at ∼5.4 ppm is measured. From this, the molar ratio of incorporated ethylene/ propylene glycols (EG/PG ratio) is calculated to be 2:1. The solubility is tested by weighting a small amount of material into 2 vials, crushing it, adding enough distilled water to make 5% and 10% by weight solutions, and agitating the vials vigorously. The material is soluble under these conditions.

### EXAMPLE VI

Synthesis of an Oligomer of Poly(ethylene glycol methyl ether MW=550), 3-Sodiosulfobenzoic Acid, Dimethyl Terephthalate, Dimethyl 5-Sodiosulfoisophthalate, and Ethylene Glycol Using 4 Wt.% Sodium Dodecylbenzenesulfonate as a Stabilizer - To a 250ml, three neck, round bottom flask equipped with a magnetic stirring bar, modified Claisen head, condenser (set for distillation), thermometer, and temperature controller (Therm-O-Watch^{TM}, I²R) is added poly(ethylene glycol methyl ether), MW=550 (Aldrich, 9.8g, 0.018 mol), 3-sodiosulfobenzoic acid (Kodak, 7.9g, 0.035 mol), dimethyl terephthalate (25.8g, 0.133 mol), dimethyl 5-sodiosulfoisophthalate (Aldrich, 7.9g, 0.027 mol), ethylene glycol (Baker, 47.1g, 0.758 mol), hydrated monobutyltin oxide (M&T Chemicals, 0.20g, 0.2% of total reaction weight, sodium acetate (MCB< 0.10g, 2 mol % of dimethyl 5-sodiosulfoisophthalate and 3-sodiosulfobenzoic acid), and Siponate ^{TM} LDS-10 (linear sodium dodecylbenzenesulfonate. Alcolac, 2.1g, vacuum dried, 4% based on final polymer weight). This mixture is heated to 180°C and maintained at that temperature overnight under argon as methanol and water distill from the reaction vessel. A ¹³C-NMR(DMSO-d₆) shows this stage of the reaction to be complete by the disappearance of the resonance for methyl esters at ∼52 ppm. The material is transferred to a 500ml, single neck round bottom flask and heated gradually over about 20 minutes to 240°C in a Kugelrohr apparatus (Aldrich) at about 0.5 mm Hg and maintained there for 1.25 hrs. The reaction flask is then allowed to cool quite rapidly to near room temperature under vacuum (∼30 min.). A ¹³C-NMR(CMSO-d₆) shows a peak for -C(O)OCH₂CH₂O(O)C- at ∼63.6 ppm (diester), a peak for -C(O)OCH₂CH₂OH at ∼59.4 ppm (monoester), a small peak for HOCH₂CH₂OH at ∼63.2 ppm and a peak for CH₃OCH₂CH₂O- at ∼58.5 ppm. Peaks for the Siponate^{TM} LDS are also present in the spectrum. The completion index, which is the ratio of the height of the diester peak to the height of the monoester peak, is measured at 4.8. The reaction affords 50.1g of the desired oligomer as a glassy, orange solid. The solubility is tested by weighing a small amount of material into a vial, crushing it, adding enough distilled water to make a 5% by weight solutions, and agitating the vial vigorously. The material completely dissolves under these conditions.

### EXAMPLE VII

Preparation of an Oligomer of Poly(Ethylene Glycol) Monomethylether, 3-Sodiosulfobenzoic Acid, Ethylene Glycol, Dimethyl 5-Sodiosulfoisophthalate, and Dimethyl Terephthalate Using a Secondary Alkanesulfonate Stabilizer - In a one-neck, round bottom flask equipped with magnetic stirring, inert gas inlet, internal thermometer, Therm-O- Watch^{TM} (I²R), and modified Claisen distilla- tion head is placed poly(ethylene glycol) monomethyl ether, MW=750 (6.0g, 0.008mole, Aldrich), m-sodiosulfobenzoic acid (7.17g, 0.032 mole, Eastman Kodak). dimethyl terephthalate (20.0g, 0.103mole, Aldrich), dimethyl 5-sodiosulfoisophthalate (6.1g, 0.02mole, Aldrich), ethylene glycol (35.0g, 0.57 mole, Baker), C14-C17 secondary alkanesulfonate (2.5g, Hoechst), Fascat 4100^{TM} (0.1g, M&T Chem. Co.) and sodium acetate (0.08g, MCB). This mixture is heated under a positive inert gas atmosphere at 180°C for 20 hours as methanol and water distill from the system. ¹³C-NMR(DMSO) analysis of the resulting material shows complete conversion to the desired prepolymer by the absence of a peak at about 53 ppm corresponding to methyl ester.

This prepolymer is then heated at 240°C at lmmHg for 30 minutes in a Kugelrohr apparatus (Aldrich). The reaction product is allowed to cool quite rapidly to room temperature (approximately 30 minutes) to give a glassy solid. ¹³C-NMR(DMSO) analysis of the solid shows high conversion to the desired oligomer by the absence of a peak at about 59.4 ppm corresponding to monoesters of ethylene glycol.

A small sample of the glassy solid is crushed and agitated vigorously with enough distilled water to make a 5% solution. The oligomer dissolves readily under these conditions.

### EXAMPLE VIII

Synthesis of an Oligomer of Isethionic Acid, Sodium Salt, m-Sulfobenzoic Acid, Monosodium Salt, Dimethyl Terephthalate, Di- methyl 5-Sulfoisophthalate, Sodium Salt, Ethylene Glycol, and Propylene Glycol - To a 250ml, three neck, round bottom flask equipped with a magnetic stirring bar, modified Claisen head, condenser (set for distillation), thermometer, and temperature controller (Therm-O-Watch^{TM}, I²R) is added isethionic acid, sodium salt (Aldrich, 12.4g, 0.084 mol), m-sulfobenzoic acid, monosodium salt (Kodak, 18.9g, 0.084 mol), dimethyl terephthalate (81.9g, 0.422 mol), dimethyl 5-sulfoisophthalate, sodium salt (Aldrich, 25.0g, 0.084 mol), ethylene glycol (Baker, 78.2g, 1.26 mol), propylene glycol (Baker, 91.3g, 1.20 mol), hydrated monobutyltin oxide (M&T Chemicals, 0.60g. 0.2% of total reaction weight), sodium acetate (MCB, 0.28g 2 mol% of dimethyl 5-sulfoisophthalate, sodium salt), sodium cumenesulfonate (Ruetgers-Nease, 5.6g, 4% of final polymer wt.), sodium xylenesulfonate (Ruetgers-Nease, 5.6g, 4% of final polymer wt., and sodium toluenesulfonate (Ruetgers-Nease, 5.6g, 4% of final polymer wt.). This mixture is heated to 180°C and maintained at that temperature overnight under argon as methanol and water distill form the reaction vessel. The material is transferred to a 1000ml, single neck, round bottom flask and heated gradually over about 20 minutes to 240°C in a Kugelrohr apparatus (Aldrich) at about 1mm Hg and maintained there for 4.5 hours. the reaction flask is then allowed to air cool quite rapidly to near room temperature under vacuum (∼30 min.). the reaction affords 130g of the desired oligomer as a brown glass. A ¹³C-NMR(DMSO-d₆) shows a resonance for -C(O)OCH₂CH₂O(O)C- at ∼63.2 ppm (diester). A resonance for -C(O)OCH₂CH₂OH at ∼59.4ppm (monoester) is not detectable and is at least 35 times smaller than the diester peak. A resonance at ∼49.8 ppm representing the sulfoethoxy capping group (-CH₂SO₃ Na) is also present. A ¹H-NMR(DMSO-d₆) shows a resonance at ∼8.4 ppm representing the sulfoisophthalate aromatic hydrogens, a resonance at ∼8.3 ppm representing a sulfobenzoate aromatic hydrogen, and a resonance at ∼7.9 ppm representing terephthalate aromatic hydrogens. The ratio of the peak area for the methylene groups of diesters of ethylene glycol at ∼4.7 ppm to the area of the peak for the methyne proton of diesters of propylene glycol at ∼5.4ppm is measured. From this, the molar ratio of incorporated ethylene/propylene glycols (EG/PG) is calculated to be 2.5:1. The solubility is tested by weighing small amounts of material into 2 vials, crushing it adding enough distilled water to make 5% and 10% solutions by weight, and agitating the vials vigorously, the material is readily soluble under these conditions.

Test Method - The following test method can be used to determine "completion index" of the s.r.a.'s of the invention.
1. The s.r.a. is well mixed as a melt to ensure representative sampling and is cooled rapidly form temperature above the melting-point to well below the vitrification temperature e.g,. 45°C or lower.
2. A solid sample of the bulk s.r.a. is taken.
3. A 10% solution of the s.r.a. in (methyl sulfoxide)-d₆ containing 1% v/v tetramethylsilane (Aldrich Chemical Co.) is made up. If necessary, warming to 90-100°C is used to achieve substantially complete dissolution of the s.r.a.
4. The solution is placed in a 180X5 mm NMR tube (Wilmad Scientific Glass, 507-pp-7 Royal Imperial thin-walled 5mm NMR sample tubes, 8".)
5. The ¹³C NMR spectrum is obtained under the following conditions:
   a. General Electric QE-300 NMR instrument
   b. probe temperature = 25°C
   c. one pulse sequence
   d. pulse width = 6.00 microseconds = 30 degree
   e. acquisition time = 819.20 msec
   f. recycle time = 1.00 sec
   g. no. of acquisitions = 5000
   h. data size = 32768
   i. line broadening = 3.00 Hz
   j. spin rate = 13 rps
   k. observe:
      frequency = 75.480824 MHz
      spec width = 20,000 Hz
      gain = 60∗8
   1. decoupler:
      standard broad band, 64 modulation
      frequency = 4.000 ppm
      power = 2785/3000
   m. plot scale:
      510.64 Hz/cm
      6.7652 ppm/cm
      from 225.00 to -4.99 ppm
6. The height of the tallest resonance observed in the 63.0-63.8 ppm region (referred to as "the 63 peak" and associated with diesters of ethylene glycol) is measured. (This is often observed as a single peak under the specified conditions but may appear as a poorly resolved multiplet).
7. The height of the resonance observed at 58.9 ppm (referred to as "the 60 peak") and associated with monoesters of ethylene glycol is measured. (When this is large enough to distinguish from the baseline, it normally appears to be a single peak under the specified conditions.)
8. The completion index is calculated as the height ratio for the "63 peak" over the "60 peak".

Use of Esters of the Invention as Soil-Release Agents - Esters of the invention are especially useful as soil release agents of a type compatible in the laundry with conventional detergent ingredients such as those found in granular laundry detergents. Additionally, the esters are useful in laundry additive or pretreatment compositions comprising the essential soil release agents and optional detergent ingredients. The soil release agents, as provided herein, will typically constitute at least about 0.1%, preferably from about 0.1% to about 10%, most preferably from about 0.2% to about 3.0% by weight of a granular detergent.

Detersive Surfactant - Detersive surfactants included in the fully-formulated detergent compositions afforded by the present invention comprises at least 1%, preferably from about 1% to about 99.8%, by weight of detergent composition depending upon the particular surfactants used and the effects desired. In a highly preferred embodiment, the detersive surfactant comprises from about 5% to about 80% by weight of the composition.

The detersive surfactant can be nonionic, anionic, ampholytic, zwitterionic, or cationic. Mixtures of these surfactants can also be used. Preferred detergent compositions comprise anionic detersive surfactants or mixtures of anionic surfactants with other surfactants, especially nonionic surfactants.

Nonlimiting examples of surfactants useful herein include the conventional C₁₁-C₁₈ alkyl benzene sulfonates and primary, secondary and random alkyl sulfates, the C₁₀-C₁₈ alkyl alkoxy sulfates, the C₁₀-C₁₈ alkyl polyglycosides and their corresponding sulfated polyglycosides, C₁₂-C₁₈ alpha-sulfonated fatty acid esters, C₁₂-C₁₈ alkyl and alkyl phenol alkoxylates (especially ethoxylates and mixed ethoxy/propoxy), C₁₂-C₁₈ betaines and sulfobetaines ("sultaines"), C₁₀-C₁₈ amine oxides, and the like. Other conventional useful surfactants are listed in standard texts.

One class of nonionic surfactant particularly useful in detergent with a compositions of the present invention is condensates of ethylene oxide with a hydrophobic moiety to provide a surfactant having an average hydrophilic-lipophilic balance (HLB) in the range of from 5 to 17, preferably from 6 to 14, more preferably from 7 to 12. The hydrophobic (lipophilic) moiety may be aliphatic or aromatic in nature. The length of the polyoxyethylene group which is condensed with any particular hydrophobic group can be readily adjusted to yield a water-soluble compound having the desired degree of balance between hydrophilic and hydrophobic elements.

Especially preferred nonionic surfactants of this type are the C₉-C₁₅ primary alcohol ethoxylates containing 3-8 moles of ethylene oxide per mole of alcohol, particularly the C₁₄-C₁₅ primary alcohols containing 6-8 moles of ethylene oxide per mole of alcohol, the C₁₂-C₁₅ primary alcohols containing 3-5 moles of ethylene oxide per mole of alcohol, and mixtures thereof.

Another suitable class of nonionic surfactants comprises the polyhydroxy fatty acid amides of the formula: 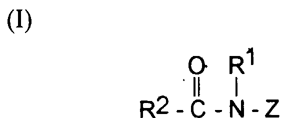 wherein: R¹ is H, C₁-C₈ hydrocarbyl, 2-hydroxyethyl, 2-hydroxypropyl, or a mixture thereof, preferably C₁-C₄ alkyl, more preferably C₁ or C₂ alkyl, most preferably C₁ alkyl (i.e., methyl); and R² is a C₅-C₃₂ hydrocarbyl moiety, preferably straight chain C₇-C₁₉ alkyl or alkenyl, more preferably straight chain C₉-C₁₇ alkyl or alkenyl, most preferably straight chain C₁₁-C₁₉ alkyl or alkenyl, or mixture thereof; and Z is a polyhydroxyhydrocarbyl moiety having a linear hydrocarbyl chain with at least 2 (in the case of glyceraldehyde) or at least 3 hydroxyls (in the case of other reducing sugars) directly connected to the chain, or an alkoxylated derivative (preferably ethoxylated or propoxylated) thereof. Z preferably will be derived from a reducing sugar in a reductive amination reaction; more preferably Z is a glycityl moiety. Suitable reducing sugars include glucose, fructose, maltose, lactose, galactose, mannose, and xylose, as well as glyceraldehyde. As raw materials, high dextrose corn syrup, high fructose corn syrup, and high maltose corn syrup can be utilized as well as the individual sugars listed above. These corn syrups may yield a mix of sugar components for Z. It should be understood that it is by no means intended to exclude other suitable raw materials. Z preferably will be selected from the group consisting of -CH₂-(CHOH)ₙ-CH₂OH, -CH(CH₂OH)-(CHOH)ₙ₋₁-CH₂OH, -CH₂-(CHOH)₂(CHOR^{'})-(CHOH)-CH₂OH, where n is an integer from 1 to 5, inclusive, and R' is H or a cyclic mono- or poly- saccharide, and alkoxylated derivatives thereof. Most preferred are glycityls wherein n is 4, particularly -CH₂-(CHOH)₄-CH₂OH.

In Formula (I), R¹ can be, for example, N-methyl, N-ethyl, N-propyl, N-isopropyl, N-butyl, N-isobutyl, N-2-hydroxy ethyl, or N-2-hydroxy propyl. For highest sudsing, R¹ is preferably methyl or hydroxyalkyl. If lower sudsing is desired, R¹ is preferably C₂-C₈ alkyl, especially n-propyl, iso-propyl, n-butyl, iso-butyl, pentyl, hexyl and 2-ethyl hexyl.

R²-CO-N< can be, for example, cocamide, stearamide, oleamide, lauramide, myristamide, capricamide, palmitamide, tallowamide, etc.

Detersive Builders - Optional detergent ingredients employed in the present invention contain inorganic and/or organic detersive builders to assist in mineral hardness control. If used, these builders comprise at least 1%, preferably from about 5% to about 80%, by weight of the detergent compositions.

Inorganic detersive builders include, but are not limited to, the alkali metal, ammonium and alkanolammonium salts of polyphosphates (exemplified by the tripolyphosphates, pyrophosphates, and glassy polymeric meta-phosphates), phosphonates, phytic acid, silicates, carbonates (including bicarbonates and sesquicarbonates), sulphates, and aluminosilicates. However, non-phosphate builders are required in some locales.

Examples of silicate builders are the alkali metal silicates, particularly those having a SiO₂:Na₂O ratio in the range 1.6:1 to 3.2:1 and layered silicates, such as the layered sodium silicates described in U.S. Patent 4,664,839, issued May 12, 1987 to H. P. Rieck, available from Hoechst under the trademark "SKS"; SKS-6 is an especially preferred layered silicate builder.

Aluminosilicate builders are especially useful in the present invention. Preferred aluminosilicates are zeolite builders which have the formula:

Na_{z}[(AlO₂)_{z}(SiO₂)_{y}]xH₂O

wherein z and y are integers of at least 6, the molar ratio of z to y is in the range from 1.0 to about 0.5, and x is an integer from about 15 to about 264.

Useful aluminosilicate ion exchange materials are commercially available. These aluminosilicates can be crystalline or amorphous in structure and can be naturally-occurring aluminosilicates or synthetically derived. Methods for producing aluminosilicate ion exchange materials are disclosed in U.S. Patent 3,985,669, Krummel, et al, issued October 12, 1976, and U.S. Patent 4,605,509, Corkill, et al, issued Aug. 12, 1986. Preferred synthetic crystalline aluminosilicate ion exchange materials useful herein are available under the designations Zeolite A, Zeolite P (B), (including those disclosed in EPO 384,070), and Zeolite X. Preferably, the aluminosilicate has a particle size of about 0.1-10 microns in diameter.

Organic detersive builders suitable for the purposes of the present invention include, but are not restricted to, a wide variety of polycarboxylate compounds, such as ether polycarboxylates, including oxydisuccinate, as disclosed in Berg, U.S. Patent 3,128,287, issued April 7, 1964, and Lamberti et al, U.S. Patent 3,635,830, issued January 18, 1972. See also "TMS/TDS" builders of U.S. Patent 4,663,071, issued to Bush et al, on May 5, 1987.

Other useful detersive builders include the ether hydroxypolycarboxylates, copolymers of maleic anhydride with ethylene or vinyl methyl ether, 1, 3, 5-trihydroxy benzene-2, 4, 6-trisulphonic acid, and carboxymethyloxysuccinic acid, the various alkali metal, ammonium and substituted ammonium salts of polyacetic acids such as ethylenediamine tetraacetic acid and nitrilotriacetic acid, as well as polycarboxylates such as mellitic acid, succinic acid, oxydisuccinic acid, polymaleic acid, benzene 1,3,5-tricarboxylic acid, carboxymethyloxysuccinic acid, and soluble salts thereof.

Citrate builders, e.g., citric acid and soluble salts thereof (particularly sodium salt), are preferred polycarboxylate builders that can also be used in granular compositions, especially in combination with zeolite and/or layered silicate builders.

Also suitable in the detergent compositions of the present invention are the 3,3-dicarboxy-4-oxa-1,6-hexanedioates and the related compounds disclosed in U.S. Patent 4,566,984, Bush, issued January 28, 1986.

In situations where phosphorus-based builders can be used, and especially in the formulation of bars used for hand-laundering operations, the various alkali metal phosphates such as the well-known sodium tripolyphosphates, sodium pyrophosphate and sodium orthophosphate can be used. Phosphonate builders such as ethane-1-hydroxy-1,1-diphosphonate and other known phosphonates (see, for example, U.S. Patents 3,159,581; 3,213,030; 3,422,021; 3,400,148 and 3,422,137) can also be used.

Optional Detersive Adjuncts - As a preferred embodiment, the conventional detergent ingredients employed herein can be selected from typical detergent composition components such as detersive surfactants and detersive builders. Optionally, the detergent ingredients can include one or more other detersive adjuncts or other materials for assisting or enhancing cleaning performance, treatment of the substrate to be cleaned, or to modify the aesthetics of the detergent composition. Usual detersive adjuncts of detergent compositions include the ingredients set forth in U.S. Pat. No. 3,936,537, Baskerville et al. Adjuncts which can also be included in detergent compositions employed in the present invention, in their conventional art-established levels for use (generally from 0% to about 20% of the detergent ingredients, preferably from about 0.5% to about 10%), include enzymes, especially proteases, lipases, and cellulases, color speckles, suds boosters, suds suppressors, antitarnish and/or anticorrosion agents, soil-suspending agents, dyes, fillers, optical brighteners, germicides, alkalinity sources, hydrotropes, anti-oxidants, enzyme stabilizing agents, perfumes, solvents, solubilizing agents, clay soil removal/anti-redeposition agents, polymeric dispersing agents, dye transfer inhibiting agents, including polyamine N-oxides such as polyvinylpyrrolidone and copolymers of N-vinyl imidazole and N-vinyl pyrrolidone, processing aids, fabric softening components, static control agents, etc.

Bleaching Agents - Optionally, the detergent compositions employed herein can comprise one or more conventional bleaching agents, activators, or stabilizers, especially peroxyacids, which do not react with the soil release compositions of this invention. In general, the formulator will ensure that the bleach compounds used are compatible with the detergent formulation. Conventional tests, such as tests of bleach activity on storage in the presence of the separate or fully-formulated ingredients, can be used for this purpose.

The peroxyacid can be a preformed peroxyacid, or a combination of an inorganic persalt (e.g., sodium perborate or sodium percarbonate), and an organic peroxyacid precursor which is converted to a peroxyacid when the combination of persalt and precursor is dissolved in water. The organic peroxyacid precursors are often referred to in the art as bleach activators.

Examples of suitable organic peroxyacids are disclosed in U.S. Patent No. 4,374,035, Bossu, issued February 15, 1983, U.S. Patent No. 4,681,592, Hardy et al, issued July 21, 1987; U.S. Patent No. 4,634,551, Burns et al, issued January 6, 1987; U.S. Patent No. 4,686,063, Burns, issued August 11, 1987; U.S. Pat. No. 4,606,838, Burns, issued August 19, 1986; and U.S. No. 4,671,891, Hartman, issued June 9, 1987. Examples of compositions suitable for laundry bleaching which contain perborate bleaches and activators therefor are disclosed in U.S. Patent No. 4,412,934, Chung and Spadini, issued November 1983; U.S. Patent No. 4,536,314, Hardy et al, issued August 20, 1985; U.S. Patent No. 4,681,695, Divo, issued July 21, 1987; and U.S. Patent No. 4,539,130, Thompson et al, issued September 3, 1985.

Specific examples of preferred peroxyacids which can be incorporated in this invention include diperoxydodecanedioic acid (DPDA), nonylamide of peroxysuccinic acid (NAPSA), nonylamide of peroxyadipic acid (NAPAA) and decyldiperoxysuccinic acid (DDPSA). The peroxyacid is preferably incorporated into a soluble granule according to the method described in the above cited U.S. Pat. No. 4,374,035. A preferred bleach granule comprises, by weight, 1% to 50% of an exotherm control agent (e.g., boric acid); 1% to 25% of a peroxyacid compatible surfactant (e.g., C13LAS); 0.1% to 10% of one or more chelant stabilizers (e.g., sodium pyrophosphates); and 10% to 70% of a water-soluble processing salt (e.g., Na2SO4).

The peroxyacid bleach is used at a level which provides an amount of available oxygen (AvO) from about 0.1% to about 10%, preferably from about 0.5% to about 5%, and most preferably from about 1% to about 4%, all by weight of the composition.

Effective amounts of peroxyacid bleach per unit dose of the composition of this invention used in typical laundry liquor, e.g., containing 65 liters of 16°-60°C. water, provide from about 1 ppm to about 150 ppm of available oxygen (AvO), more preferably from about 2 ppm to about 20 ppm. The laundry liquor should also have a pH of from 7 to 11, preferably 7.5 to 10.5, for effective peroxyacid bleaching. See Col. 6, lines 1-10, of U.S. Pat. No. 4,374,035.

Alternatively, the composition may contain a suitable organic precursor which generates one of the above peroxyacids when reacted with alkaline hydrogen peroxide in aqueous solution. The source of hydrogen peroxide can be any inorganic peroxygen compound which dissolves in aqueous solution to generate hydrogen peroxide, e.g., sodium perborate (monohydrate and tetrahydrate) and sodium percarbonate.

The level of peroxygen bleach within compositions of the invention is from about 0.1% to about 95% and preferably from about 1% to about 60%. When the bleaching compositions within the invention are also fully formulated detergent compositions, it is preferred that the level of peroxygen bleach is from about 1% to about 20%.

The level of bleach activator within the compositions of the invention is from about 0.1% to about 60% and preferably from about 0.5% to about 40%. When the bleaching compositions within the invention are also fully formulated detergent compositions, it is preferred that the level of bleach activator is from about 0.5% to about 20%.

The peroxyacid and the soil release esters herein are preferably present at a weight ratio of available oxygen provided by the peroxyacid to soil release esters of from about 4:1 to about 1:30, more preferably from about 2:1 to about 1:15, and most preferably from about 1:1 to about 1:7.5. The combination can be incorporated into a fully formulated, stand alone product, or it can be formulated as an additive to be used in combination with a laundry detergent.

Cellulase Enzyme - Optionally, the detergent compositions employed herein can comprise one or more conventional enzymes that do not react with the soil release compositions of this invention. A particularly preferred enzyme is cellulase. The cellulase employed herein may be any bacterical or fungal cellulase, having a pH optimum of between 5 and 9.5. Suitable cellulases are disclosed in U.S. Patent 4,435,307, Barbesgoard et al, issued March 6, 1984, which discloses fungal cellulase produced by a strain of Humicola insolens, particularly by the Humicola strain DSM 1800 or a cellulase 212-producing fungus belonging to the genus Aeromonas, and cellulase extracted from the hepatopancreas of a marine mullosk (Dolabella Auricula Solander). Suitable cellulases are also disclosed in GB-A-2,075,028, GB-A-2,095,275 and DE-OS-2,247,832.

Preferred cellulases are those as described in International Patent Application WO 91/17243. For example, a cellulase preparation useful in the compositions of the invention can consist essentially of a homogeneous endoglucanase component, which is immunoreactive with an antibody raised against a highly purified 43kD cellulase derived from Humicola insolens, DSM 1800, or which is homologous to said 43kD endoglucanase.

Enzymes are normally incorporated at a level sufficient to provide up to about 50 mg by weight, more typically about 0.01 mg to about 10 mg, of active enzyme per gram of detergent composition. Stated otherwise, an effective amount of the enzymes optionally employed in the present invention will comprise at least about 0.001%, preferably from about 0.001% to about 5%, more preferably from about 0.001% to about 1%, most preferably from about 0.01% to about 1%, by weight of detergent composition.

The soil release agents of the invention, at concentrations in an aqueous fabric laundering liquor ranging from about 1 to about 50 ppm, more preferably about 2.5 to about 30 ppm, provide effective, combined cleaning and soil release treatments for polyester, polyester-cotton blends, and other synthetic fabrics washed in an aqueous, preferably alkaline (pH range about 7 to about 11, more preferably about 7.5 to about 10.5) environment, in the presence of typical granular detergent ingredients. Surprisingly (especially insofar as pH and anionic surfactant are concerned), the above-identified detergent ingredients can be present in the wash water at their art disclosed levels to perform their conventional tasks, e.g., for cleaning and bleaching fabrics or the like, without ill-effects on the soil release properties of the esters.

Thus the invention encompasses a method of laundering fabrics and concurrently providing a soil release finish thereto. The method simply comprises contacting said fabrics with an aqueous laundry liquor containing the conventional detergent ingredients described hereinabove, as well as the above-disclosed effective levels of a soil release agent (namely, from about 1 to 50ppm of an oligomeric composition comprising at least 10% by weight of an ester of the invention). Although this method is not especially limited in terms of factors such as pH and surfactant types present, it should be appreciated that for best cleaning of fabrics, it is often especially desirable to make use in the laundry process of anionic surfactants, such as conventional linear alkylbenzene sulfonates and also to use higher pH ranges as defined above. Use of these surfactants and pH ranges surprisingly does not prevent the esters of the invention from acting effectively as soil release agents. Thus, a preferred method for an optimized combination of cleaning and soil-release finishing provided by the invention constitutes using all of the following:
- the preferred levels of soil release agent (2.5-30ppm);
- anionic surfactant;
- pH of from about 7 to about 11; and, by way of soil release agent, a preferred composition of the invention, such as the oligomeric product of reacting compounds comprising ethoxylated or propoxylated hydroxy-ethane and propane sulfonate end-caps, sulfoaroyl end-caps, modified poly(oxyethylene)oxy end-caps, ethoxylated or propoxylated phenolsulfonate caps, dimethyl terephthalate, dimethyl sulfoisophthalate, ethylene glycol and/or propylene glycol and, optionally, diethylene glycol, triethylene glycol, and tetraethylene glycol.

In the preferred method polyester, polyester-cotton blends, and other synthetic fabrics are used; best soil release results are achieved thereon, but other fabric types can also be present.

The most highly preferred method for simultaneous cleaning and soil-release treatment is a "multi-cycle" method; although benefits are surprisingly obtainable after as little treatment as a single laundry/use cycle, best results are obtained using two or more cycles comprising the ordered sequence of steps:
a) contacting said fabrics with said aqueous laundry liquor in a conventional automatic washing machine or by hand- wash for periods ranging from about 5 minutes to about 1 hour;
b) rinsing said fabrics with water;
c) line- or tumble-drying said fabrics; and
d) exposing said fabrics to soiling through normal wear or domestic use.

Naturally, it will be appreciated that this "multi-cycle" method encompasses methods starting at any one of steps a) through d), provided that the soil release treatment step (a) is used two or more times. Optionally, a further "soaking" step may be included in the laundry/use cycle. Typically, users soak or pre-soak laundry for as little as five minutes to as long as overnight or longer by contacting said fabrics with said aqueous laundry liquor.

In the above, step (a) includes both hand-washing or U.S., Japanese, or European washing machines operating under their conventional conditions of time, temperature, fabric load, amounts of water and laundry product concentrations. Also, in step (c), the "tumble-drying" to which is referred especially involves use of conventional domestic brands of programmable laundry dryers (these are occasionally integral with the washing machine) using their conventional fabric loads, temperatures and operating times.

The following nonlimiting examples illustrate the use of a typical ester composition of the invention as a soil release agent for thru-the-wash application to polyester fabrics.

### EXAMPLES IX-XII

Laboratory-synthesized granular detergent compositions are prepared comprising the following ingredients.

| | **Percent Wt)** | | | |
|---|---|---|---|---|
| **Ingredient** | **IX** | **X** | **XI** | **XII** |
| Na C₁₁-C₁₃ alkylbenzenesulfonate | 13.3 | 13.7 | 10.4 | 11.1 |
| Na C₁₄-C₁₅ alcohol sulfate | 3.9 | 4.0 | 4.5 | 11.2 |
| Na C₁₄-C₁₅ alcohol ethoxylate (0.5) sulfate | 2.0 | 2.0 | 0.0 | 0.0 |
| Na C₁₂-C₁₃ alcohol ethoxylate (6.5) | 0.5 | 0.5 | 0.5 | 1.0 |
| tallow fatty acid | 0.0 | 0.0 | 0.0 | 1.1 |
| sodium tripolyphosphate | 0.0 | 41.0 | 0.0 | 0.0 |
| Zeolite A, hydrate (0.1-10 micron size) | 26.3 | 0.0 | 21.3 | 28.0 |
| sodium carbonate | 23.9 | 12.4 | 25.2 | 16.1 |
| sodium polyacrylate (45%) | 3.4 | 0.0 | 2.7 | 3.4 |
| sodium silicate (1:6 ratio NaO/SiO₂)(46%) | 2.4 | 6.4 | 2.1 | 2.6 |
| sodium sulfate | 10.5 | 10.9 | 8.2 | 15.0 |
| sodium perborate | 1.0 | 1.0 | 5.0 | 0.0 |
| poly(ethylene glycol), MW∼4000 (50%) | 1.7 | 0.4 | 1.0 | 1.1 |
| citric acid | 0.0 | 0.0 | 3.0 | 0.0 |
| nonyl ester of sodium p-hydroxybenzenesulfonate | 0.0 | 0.0 | 5.9 | 0.0 |
| moisture | 8.5 | 5.1 | 8.1 | 7.3 |

Balance to 100% can, for example, include minors like optical brightener, perfume, suds suppressor, soil dispersant, protease, lipase, cellulase, chelating agents, dye transfer inhibiting agents, additional water, and fillers, including CaCO₃, talc, silicates, etc.

Aqueous crutcher mixes of heat and alkali stable components of the detergent compositions are prepared and spray-dried and the other ingredients are admixed so that they contain the ingredients tabulated at the levels shown. The soil release agent of Example V is pulverized and admixed in an amount sufficient for use at a level of 0.5% by weight in conjunction with the detergent compositions.

The detergent granules with soil release agents are added (99.5 parts/0.5 parts by weight, respectively) together with a 6 lb, load of previously laundered fabrics (load composition: 10 wt. % polyester fabrics/50 wt. % polyester-cotton/40 wt. % cotton fabrics) to a Sears KENMORE washing machine. Actual weights of detergent and ester compositions are taken to provide a 995 ppm concentration of the fonner and 5 ppm concentration of the latter in the 17 gallon (65 l) water-fill machine. The water used has 7 grains/gallon hardness and a pH of 7 to 7.5 prior to (about 9 to about 10.5 after) addition of the detergent and ester compositions.

The fabrics are laundered at 35°C (95°F) for a full cycle (12 min.) and rinsed at 21°C (70°F). The fabrics are then line dried and are exposed to a variety of soils (by wear or controlled application). The entire cycle of laundering and soiling is repeated several times for each of the detergent compositions. Separate fabric bundles are reserved for use with each of the detergent compositions. All polyester containing fabrics display significantly improved removal of soils (especially oleophilic types) during laundering compared with fabrics which have not been exposed to the esters of the invention.

### EXAMPLE XIII-XVI

Aqueous crutcher mixes of heat and alkali stable components of the detergent compositions are prepared by a procedure identical to that of Examples IX-XII. The soil release agent of Example Vlll is pulverized and admixed in an amount sufficient for use at a level of 0.5% by weight in conjunction with the detergent compositions.
The laundering method of Examples IX-XII is repeated. All polyester containing fabrics display significantly improved removal of soils (especially oleophilic types) during laundering compared with fabrics which have not been exposed to the esters of the invention.

The soil release agents of the invention are especially useful in conventional laundry detergent compositions such as those typically found in granular detergents or laundry bars. U.S. Patent 3,178,370, Okenfuss, issued April 13, 1965, describes laundry detergent bars and processes for making them. Philippine Patent 13,778, Anderson, issued Sept. 23, 1980, describes synthetic detergent laundry bars. Methods for making laundry detergent bars by various extrusion methods are well known in the art.

### EXAMPLE XVII

A laundry bar suitable for hand-washing soiled fabrics is prepared by standard extrusion processes and comprises the following:

| Component | Weight % |
|---|---|
| C₁₂ linear alkyl benzene sulfonate | 30 |
| Phosphate (as sodium tripolyphosphate) | 7 |
| Sodium carbonate | 25 |
| Sodium pyrophosphate | 7 |
| Coconut monoethanolamide | 2 |
| Zeolite A (0.1-10 micron) | 5 |
| Carboxymethylcellulose | 0.2 |
| Ethylenediamine disuccinate chelant (EDDS) | 0.4 |
| Polyacrylate (m.w. 1400) | 0.2 |
| Nonanoyloxybenzenesulfonate | 5 |
| Sodium percarbonate* | 5 |
| Brightener, perfume | 0.2 |
| Protease | 0.3 |
| CaSO₄ | 1 |
| MgSO₄ | 1 |
| Water | 4 |
| Filler** | Balance to 100% |

| | |
|---|---|
| *Average particle size of 400 to 1200 microns. | |
| **Can be selected from convenient materials such as CaCO₃, talc, clay, silicates, and the like. | |

The detergent laundry bars are processed in conventional soap or detergent bar making equipment as commonly used in the art. The soil release agent of Example VII is pulverized and admixed in an amount sufficient for use at a level of 0.5% by weight in conjunction with the detergent compositions. Testing is conducted following the testing methods in Examples IX-XII. All polyester- containing fabrics display significantly improved removal of soils (especially oleophilic types) during laundering compared with fabrics which have not been exposed to the esters of the invention.

### EXAMPLE XVIII

Laundry detergent bars comprising the detergent composition of Example XVII are prepared by a procedure identical to that of Examples XVII. The soil release agent of Example VI is pulverized and admixed in an amount sufficient for use at a level of 0.5% by weight in conjunction with the detergent compositions. The laundering method of Examples XVII is repeated. All polyester containing fabrics display significantly improved removal of soils (especially oleophilic types) during laundering compared with fabrics which have not been exposed to the esters of the invention.

### EXAMPLE XIX

Aqueous crutcher mixes of heat and alkali stable components of the detergent compositions are prepared by a procedure identical to that of Examples XVI. The soil release agent of Example IV is pulverized and admixed in an amount sufficient for use at a level of 0.5% by weight in conjunction with the detergent compositions.
The laundering method of Examples XVI is repeated. All polyester containing fabrics display significantly improved removal of soils (especially oleophilic types) during laundering compared with fabrics which have not been exposed to the esters of the invention.

Optional Nonionic Surfactant Processing Agent - Optionally, to lower the melt viscosity and to further increase ease of dissolution in the wash liquor, nonionic surfactants can be added to the soil release agent reactants. During synthesis, soil release agents, especially doubly end-capped esters which primarily contain end-cap units of sodium isethionate, sodium 2-[2-hydroxy- ethoxy]ethanesulfonate, sodium 3-(2-hydroxyethoxy)propanesulfonate or 4-(2-hydroxyethoxy)benzenesulfonate, are highly viscous and, therefore, difficult to stir and pump. This is particularly true when the level of poly(oxyethylene)oxy units in the polymer is low. Further, such soil release agents tend to be slow to dissolve when introduced into the wash liquor. To avoid these difficulties, ethoxylated nonionic surfactants, such as tallow alcohol ethoxy- lates, with a degree of ethoxylation of from about 3 to about 50, preferably from about 5 to about 11, can be mixed with the soil release agent reactants. The nonionic agent can be added at any time near the end of the oligomerization step; however, transesterification of the nonionic agent with the soil release oligomer should be kept to a minimum. Preferably, the nonionic agent should be added just prior to the point in which the maximum melt viscosity of the soil release agent would be achieved. The nonionic agent can also be thoroughly mixed with the soil release agent immediately after the oligomerization step while the oligomer is still in the molten state. The nonionic agent lowers the melt viscosity of the soil release agent and increases the ease of dissolution of the soil release agent when it is introduced to the wash liquor. Typically from about 0.05% to about 25%, preferably from about 0.1% to about 10%, by weight of soil release agent, of nonionic surfactant is added to the soil release agent.

### EXAMPLE XX

Synthesis of an Oligomer of Sodium Isethionate, Dimethyl Terephthalate, m-Sodiosulfobenzoic Acid, Dimethyl 5-Sulfoisophthalate, Sodium Salt, Ethylene Glycol, and Propylene Glycol - To a 250ml, three neck, round bottom flask equipped with a magnetic stirring bar, modified Claisen head, condenser (set for distil- lation) thermometer, and temperature controller (Therm-O-Watch^{TM}, l²R) is added isethionic acid, sodium salt (Aldrich, 3.85g, 0.026 mol), dimethyl terephthalate (55.5g, 0.286 mol), m-sodiosulfo- benzoic acid (5.85g, 0.026 mole, Eastman Kodak) dimethyl 5-sulfo- isophthalate, sodium salt (Aldrich, 15.4g, 0.052 mol), ethylene glycol (Baker, 24.2g, 0.390 mol), propylene glycol (Baker, 28.7g, 0.377 mol), diethylene glycol (Aldrich, 6.6g, 0.0624 mol), hydrated monobutyltin oxide (M&T Chemicals, 0.17g, 0.2% of total reaction weight), sodium acetate (MCB, 0.09g, 2 mol% of dimethyl sulfoiso- phthalate, sodium salt), sodium cumenesulfonate (Ruetgers-Nease, 3.3g, 4% of final polymer wt.), sodium xylenesulfonate (Ruetgers- Nease, 3.3g, 4% of final polymer wt.), sodium p-toluenesulfonate (Ruetgers-Nease, 3.3g, 4% of final polymer wt.). This mixture is heated to 180°C and maintained at that temperature overnight under argon as methanol and water distill from the reaction vessel. The material is transferred to a 1000 ml, single neck, round bottom flask and heated gradually over about 20 minutes to 240°C in a Kugelrohr apparatus (Aldrich) at about 2mm Hg and maintained there for 3 hours. The reaction flask is then allowed to air cool quite rapidly to near room temperature under vacuum (∼30 min.) The reaction affords 49g of the desired oligomer as a yellow, crunchy glass. A ¹³C-NMR(DMSO-d₆) shows a resonance for -C(O)OCH₂CH₂O(O)C- at ∼63.2 ppm (diester). A resonance for -C(O)OCH₂CH₂OH at ∼59.4 ppm (monoester) is not detectable and is at least 40 times smaller than the diester peak. A resonance at ∼51.0 ppm representing the sulfoethoxy capping group (-CH₂SO₃Na) is also present. A ¹H-NMR(DMSO-d₆) shows a resonance at ∼8.4 ppm representing the sulfoisophthalate aromatic hydrogens and a resonance at ∼7.9 ppm representing terephthalate aromatic hydrogens. The ratio of the peak for the methylene groups of diesters of ethylene glycol at ∼4.7 ppm to the area of the peak for the methyne proton of diesters of propylene glycol at ∼5.4 ppm is measured. From this , the molar ratio of incorporated ethylene/propylene glycols (E/P ratio) is calculated to be 1.75:1. The solubility is tested by weighing small amounts of material into 2 vials, crushing it, adding enough distilled water to make 5% and 10% by weight solutions, respectively, and agitating the vials vigorously. The material is mostly soluble under these conditions, but it dissolves slowly.

The experiment is repeated with the addition of 10 grams of ethoxylated tallow alcohol (degree of ethoxylation = 9) to the molten polymer after 2 hours and 50 minutes of vacuum condensation. The nonionic surfactant is vigorously mixed with the molten polymer, and the vacuum condensation conditions are continued for 5 more minutes. The polymer blend with the nonionic surfactant is then cooled to give a glassy solid. This solid dissolves faster in water at room temperature than the sample made without the blended nonionic surfactant.

## Claims

1. A detergent composition characterized in that it comprises at least 1% by weight of a detersive surfactant and at least 0.1% by weight of a soil release agent which comprises at least 10% of a substantially linear end-capped ester having molecular weight ranging from 500 to 8,000; said ester consisting essentially of on a molar basis:
i) from 1 to 2 moles of two or more types of end-capping units selected from the group consisting of:
a) ethoxylated or propoxylated hydroxy-ethane and propanesulfonate end-capping units of the formula (MO₃S)(CH₂)ₘ(CH₂CH₂O)(RO)ₙ-, wherein M is a salt-forming cation such as sodium or tetraalkylammonium. R is ethylene or propylene or a mixture thereof, m is 0 or 1, and n is from 0 to 4;
b) sulfoaroyl units of the formula -(O)C(C₆H₄)(SO₃M), wherein M is a salt forming cation;
c) modified poly(oxyethylene)oxy monoalkyl ether units of the formula XO(CH₂CH₂O)ₖ-, wherein X contains from 1 to 4 carbon atoms and k is from 1 to 100; and
d) ethoxylated or propoxylated phenolsulfonate end-capping units of the formula NaO₃S(C₆H₄)-(RO)ₙ-, wherein n is from 1 to 5 and R is ethylene or propylene or a mixture thereof;
ii) from 0.5 to 66 moles of units selected from the group consisting of:
a) oxyethyleneoxy units;
b) oxy-1,2-propyleneoxy units; and
c) mixtures of a) and b);
iii) from 0 to 50 moles of di(oxyethylene)oxy units;
iv) from 0 to 50 moles of poly(oxyethylene)oxy units with a degree of polymerization of at least 3;
v) from 1.5 to 40 moles of terephthaloyl units;
vi) from 0.05 to 26 moles of 5-sulfoisophthaloyl units of the formula -(O)C(C₆H₃)(SO₃M)C(O)-, wherein M is a salt forming cation such as an alkali metal or tetraalkylammonium ion; such that the total units of ii), iii), and iv) ranges from 0.5 to 66 moles and such that no more than 50% by weight of the ester is derived from the poly(oxyethylene)oxy units and modified poly(oxyethylene)oxy end-capping units and such that the total of units iii) and iv) is no more than 75% of the total of units ii), iii), and iv).

2. A detergent composition according to Claim 1 characterized in that it comprises from 25% to 100% by weight of ester having the empirical formula (CAP)ₓ(EG/PG)_{y'}(T)_{z}(SIP)_{q}; wherein (CAP) represents a mixture of said end-capping units i); (EG/PG) represents said oxyethyleneoxy and oxy-1,2-propyleneoxy units ii); (T) represents said terephthaloyl units v); (SIP) represents the sodium salt form of said 5-sulfoisophthaloyl units vi); x is 2; y' is from 2 to 27, preferably 5, z is from 2 to 20, preferably 5; q is from 0.4 to 8, preferably 1; wherein x, y', z, and q represent the average number of moles of the corresponding units per mole of said ester.

3. A detergent composition according to Claim 2 comprising at least 50% by weight of said ester having molecular weight ranging from 500 to 5,000.

4. A detergent composition according to Claim 2 wherein (CAP) represents a mixture of ethoxylated or propoxylated hydroxy-ethane and propane sulfonate end-capping units and sulfobenzoyl end-capping units.

5. A detergent composition according to Claim 2 wherein (CAP) represents a mixture of ethoxylated or propoxylated hydroxy-ethane and propane sulfonate end-capping units and modified poly(oxyethylene)oxy monoalkyl ether units of the formula XO(CH₂CH₂O)ₖ-, wherein X contains from 1 to 4 carbon atoms and k is from 1 to 100.

6. A detergent composition according to Claim 2 wherein (CAP) represents a mixture of sulfobenzoyl end-capping units and modified poly(oxyethylene)oxy monoalkyl ether units of the formula XO(CH₂CH₂O)ₖ-, wherein X contains from 1 to 4 carbon atoms and k is from 1 to 100.

7. A detergent composition according to Claim 2 wherein (CAP) represents a mixture of ethoxylated or propoxylated hydroxy-ethane and propane sulfonate end-capping units and ethoxylated or propoxylated phenolsulfonate end-capping units of the formula NaO₃S(C₆H₄)(RO)ₙ-, wherein n is from 1 to 5 and R is ethylene or propylene or a mixture thereof.

8. A detergent composition according to Claim 2 wherein (CAP) represents a mixture of sulfobenzoyl end-capping units and ethoxylated or propoxylated phenolsulfonate end-capping units ofthe formula NaO₃S(C₆H₄)(RO)ₙ-, wherein n is from 1 to 5 and R is ethylene or propylene or a mixture thereof.

9. A detergent composition according to Claim 2 wherein (CAP) represents a mixture of modified poly(oxyethylene)oxy monoalkyl ether units of the formula XO(CH₂CH₂O)ₖ-, wherein X contains from 1 to 4 carbon atoms and k is from 1 to 100, and ethoxylated or propoxylated phenolsulfonate end-capping units of the formula NaO₃S(C₆H₄)(RO)ₙ-, wherein n is from 1 to 5 and R is ethylene or propylene or a mixture thereof.

10. A detergent composition according to Claim 1 characterized in that it comprises from 25% to 100% by weight of ester having the empirical formula (CAP)ₓ(EG/PG)_{y'}(DEG)_{y"}(T)_{z}(SIP)_{q}; wherein (CAP) represents a mixture of said end-capping units i); (EG/PG) represents said oxyethyleneoxy and oxy-1,2-propyleneoxy units ii); (DEG) represents said di(oxyethylene)oxy units iii); (T) represents said terephthaloyl units v); (SIP) represents the sodium salt form of said 5-sulfoisophthaloyl units vi); x is 2; y' is from 2 to 27; y" is from 0 to 18; z is from 1.5 to 40; q is from 0.05 to 26; wherein x, y', y", z, and q represent the average number of moles of the corresponding units per mole of said ester.

11. A detergent composition according to Claim 1 characterized in that it comprises from 25% to 100% by weight of ester having the empirical formula (CAP)ₓ(EG/PG)_{y'}(DEG)_{y"}(PEG)_{y"'}(T)_{z}(SIP)_{q}; wherein (CAP) represents a mixture of said end-capping units i);(EG/PG) represents said oxyethyleneoxy and oxy-1,2-propyleneoxy units ii); (DEG) represents said di(oxyethylene)oxy units iii); (PEG) represents said poly(oxyethylene)oxy units iv); (T) represents said terephthaloyl units v); (SIP) represents the sodium salt form of said 5-sulfoisophthaloyl units vi); x is 2; y' is from 0.5 to 66; y" is from 0 to 50; y"' is from 0 to 50; y'+ y"+y"' totals 0.5 to 66; z is from 1.5 to 40; q is from 0.05 to 26; wherein x, y', y", y"', z, and q represent the average number of moles of the corresponding units per mole of said ester.

12. A detergent composition according to Claim 1 further comprising a preformed peroxyacid bleach.

13. A detergent composition according to Claim 1 further comprising from 1% to 20% of a peroxygen bleach and from 0.5% to 20% of a bleach activator.

14. A detergent composition according to Claim 13 wherein said peroxygen bleach is sodium percarbonate; said detersive surfactant is a primary alcohol ethoxylate; and wherein said detergent composition further comprises at least 0.001% cellulase enzyme, and from 0.5% to 10% of a dye transfer inhibiting agent.

15. A method of laundering fabrics and concurrently providing a soil release finish thereto, comprising contacting said fabrics with an aqueous laundry liquor containing at least 300 ppm of a detergent composition according to Claim 1 or Claim 14.

16. A method according to Claim 15 wherein said fabrics are subjected to two or more cycles each comprising the ordered sequence of steps:
a) contacting said fabrics with said aqueous laundry liquor in a conventional automatic washing-machine or by hand-wash for periods ranging from 5 minutes to I hour;
b) rinsing said fabrics with water;
c) line- or tumble-drying said fabrics; and
d) exposing said fabrics to soiling through normal wear or domestic use.

17. A water-soluble or water-dispersible oligomeric soil release agent comprising at least 10% of a substantially linear end-capped ester having molecular weight ranging from 500 to 8,000; said ester consisting essentially of, on a molar basis:
i) from 1 to 2 moles of two or more types of end-capping units selected from the group consisting of:
a) end-capping units of the formula (MO₃S)(CH₂)ₘ (CH₂CH₂O)(RO)ₙ-, wherein M is a salt-forming cation such as sodium or tetraalkylammonium. R is ethylene or propylene or a mixture thereof m is 0 or 1, and n is from 0 to 4;
b) sulfoaroyl units ofthe formula -(O)C(C₆H₄)(SO₃M), wherein M is a salt forming cation; and
c) modified poly(oxyethylene)oxy monoalkyl ether units of the formula XO(CH₂CH₂O)k-, wherein X contains from 1 to 4 carbon atoms and k is from 1 to 100;
d) ethoxylated or propoxylated phenolsulfonate end-capping units of the formula NaO₃S(C₆H₄)(RO)ₙ-, wherein n is from 1 to 5 and R is ethylene or propylene or a mixture thereof;
ii) from 0.5 to 66 moles of units selected from the group consisting of:
a) oxyethyleneoxy units;
b) oxy-1,2-propyleneoxy units; and
c) mixtures of a) and b);
iii) from 0 to 50 moles of di(oxyethylene)oxy units;
iv) from 0 to 50 moles of poly(oxyethylene)oxy units with a degree of polymerization of at least 3;
v) from 1.5 to 40 moles ofterephthaloyl units;
vi) from 0.05 to 26 moles of 5-sulfoisophthaloyl units of the formula -(O)C(C₆H3)(SO₃M)C(O)-, wherein M is a salt forming cation such as an alkali metal or tetraalkylammonium ion; such that the total units of ii), iii), and iv) ranges from 0.5 to 66 moles and such that no more than 50% by weight of the ester is derived from the poly(oxyethylene)oxy units and modified poly(oxyethylene)oxy end-capping units and such that the total of units iii) and iv) is no more than 75% of the total of units ii), iii), and iv).

18. A soil release agent according to Claim 17 further comprising a nonionic surfactant processing agent.

## Patentansprüche

1. Detergenzzusammensetzung, dadurch gekennzeichnet, daß sie mindestens 1 Gew.-% von einem detersiven grenzflächenaktiven Mittel und mindestens 0,1 Gew.-% von einem schmutzabweisenden Mittel umfaßt, welches letztgenannte mindestens 10% von einem im wesentlichen linearen endverkappten Ester mit einem Molekulargewicht von 500 bis 8000 enthält; welcher Ester, auf molarer Basis, im wesentlichen aus
i) 1 bis 2 Mol von zwei oder mehreren Typen endverkappender Einheiten, welche von der Gruppe ausgewählt sind, die aus:
a) endverkappenden ethoxylierten oder propoxylierten Hydroxyethan- und -propansulfonat-Einheiten der Formel (MO₃S) (CH₂)ₘ(CH₂CH₂O) (RO)ₙ-, worin M ein salzbildendes Kation, wie Natrium oder Tetraalkylammonium darstellt, R für Ethylen oder Propylen oder ein Gemisch hievon steht, m 0 oder 1 ist und n von 0 bis 4 beträgt;
b) Sulfoaroyl-Einheiten der Formel -(O)C(C₆H₄) (SO₃M), worin M ein salzbildendes Kation darstellt;
c) modifizierten Poly(oxyethylen)oxymonoalkylether-Einheiten der Formel XO(CH₂CH₂O)ₖ-, worin X 1 bis 4 Kohlenstoffatome aufweist und k von 1 bis 100 beträgt; und
d) endverkappenden ethoxylierten oder propoxylierten Phenolsulfonat-Einheiten der Formel NaO₃S(C₆H₄)-(RO)ₙ- besteht, worin n von 1 bis 5 beträgt und R für Ethylen oder Propylen oder ein Gemisch hievon steht;
ii) 0,5 bis 66 Mol von Einheiten, welche von der Gruppe ausgewählt sind, die aus:
a) Oxyethylenoxy-Einheiten;
b) Oxy-1,2-propylenoxy-Einheiten; und
c) Gemischen aus a) und b) besteht;
iii) 0 bis 50 Mol von Di(oxyethylen)oxy-Einheiten;
iv) 0 bis 50 Mol von Poly(oxyethylen)oxy-Einheiten mit einem Polymerisationsgrad von mindestens 3;
v) 1,5 bis 40 Mol von Terephthaloyl-Einheiten;
vi) 0,05 bis 26 Mol von 5-Sulfoisophthaloyl-Einheiten der Formel -(O)C(C₆H₃) (SO₃M)C(O)- besteht, worin M ein salzbildendes Kation wie ein Alkalimetall- oder Tetraalkylammoniumion ist;
sodaß die gesamten Einheiten ii), iii) und iv) von 0,5 bis 66 Mol darstellen und sich nicht mehr als 50 Gew.-% des Esters aus den Poly(oxyethylen)oxy-Einheiten und den endverkappenden modifizierten Poly(oxyethylen)oxy-Einheiten herleiten und die gesamten Einheiten iii) und iv) nicht mehr als 75% der gesamten Einheiten ii), iii) und iv) darstellen.

2. Detergenzzusammensetzung nach Anspruch 1, dadurch gekennzeichnet, daß sie 25 Gew.-% bis 100 Gew.-% von einem Ester der Summenformel (CAP)ₓ(EG/PG)_{y'}(T)_{z}(SIP)_{q} umfaßt, worin (CAP) ein Gemisch der genannten endverkappenden Einheiten i) darstellt; (EG/PG) für die genannten Oxyethylenoxy- und Oxy-1,2-propylenoxy-Einheiten ii) steht; (T) die genannten Terephthaloyl-Einheiten v) bezeichnet; (SIP) für die Natriumsalzform der genannten 5-Sulfoisophthaloyl-Einheiten vi) steht; x 2 ist; y' von 2 bis 27, vorzugsweise 5 beträgt; z von 2 bis 20, vorzugsweise 5 beträgt; q von 0,4 bis 8, vorzugsweise 1 beträgt, wobei x, y', z und q die mittlere Anzahl von Molen der entsprechenden Einheiten pro Mol des genannten Esters darstellen.

3. Detergenzzusammensetzung nach Anspruch 2, welche mindestens 50 Gew.-% von dem genannten Ester mit einem Molekulargewicht von 500 bis 5000 umfaßt.

4. Detergenzzusammensetzung nach Anspruch 2, wobei (CAP) ein Gemisch aus endverkappenden ethoxylierten oder propoxylierten Hydroxyethan- und -propansulfonat-Einheiten und endverkappenden Sulfobenzoyl-Einheiten darstellt.

5. Detergenzzusammensetzung nach Anspruch 2, wobei (CAP) ein Gemisch aus endverkappenden ethoxylierten oder propoxylierten Hydroxyethan- und -propansulfonat-Einheiten und modifizierten Poly(oxyethylen)oxymonoalkylether-Einheiten der Formel XO(CH₂CH₂O)ₖ- darstellt, worin X 1 bis 4 Kohlenstoffatome besitzt und k von 1 bis 100 beträgt.

6. Detergenzzusammensetzung nach Anspruch 2, wobei (CAP) ein Gemisch aus endverkappenden Sulfobenzoyl-Einheiten und modifizierten Poly(oxyethylen)oxymonoalkylether-Einheiten der Formel XO(CH₂CH₂O)ₖ- darstellt, worin X 1 bis 4 Kohlenstoffatome besitzt und k von 1 bis 100 beträgt.

7. Detergenzzusammensetzung nach Anspruch 2, wobei (CAP) ein Gemisch aus endverkappenden ethoxylierten oder propoxylierten Hydroxyethan- und -propansulfonat-Einheiten und endverkappenden ethoxylierten oder propoxylierten Phenolsulfonat-Einheiten der Formel NaO₃S(C₆H₄) (RO)ₙ- darstellt, worin n von 1 bis 5 beträgt und R Ethylen oder Propylen oder ein Gemisch hievon bedeutet.

8. Detergenzzusammensetzung nach Anspruch 2, wobei (CAP) ein Gemisch aus endverkappenden Sulfobenzoyl-Einheiten und endverkappenden ethoxylierten oder propoxylierten Phenolsulfonat-Einheiten der Formel NaO₃S(C₆H₄)(RO)ₙ- darstellt, worin n von 1 bis 5 beträgt und R Ethylen oder Propylen oder ein Gemisch hievon bedeutet.

9. Detergenzzusammensetzung nach Anspruch 2, wobei (CAP) ein Gemisch aus modifizierten Poly(oxyethylen)oxymonoalkylether-Einheiten der Formel XO(CH₂CH₂O)ₖ-, worin X 1 bis 4 Kohlenstoffatome besitzt und k von 1 bis 100 beträgt, und endverkappenden ethoxylierten oder propoxylierten Phenolsulfonat-Einheiten der Formel NaO₃S(C₆H₄) (RO)ₙ- darstellt, worin n von 1 bis 5 beträgt und R Ethylen oder Propylen oder ein Gemisch hievon bedeutet.

10. Detergenzzusammensetzung nach Anspruch 1, dadurch gekennzeichnet, daß sie 25 Gew.-% bis 100 Gew.-% von einem Ester der Summenformel (CAP)ₓ(EG/PG)_{y'}(DEG)_{y"}(T)_{z}(SIP)_{q} umfaßt, worin (CAP) ein Gemisch der genannten endverkappenden Einheiten i) darstellt; (EG/PG) für die genannten Oxyethylenoxy- und Oxy-1,2-propylenoxy-Einheiten ii) steht; (DEG) die genannten Di(oxyethylen)oxy-Einheiten iii) darstellt; (T) die genannten Terephthaloyl-Einheiten v) bezeichnet; (SIP) für die Natriumsalzform der genannten 5-Sulfoisophthaloyl-Einheiten vi) steht; x 2 ist; y' von 2 bis 27 beträgt; y" von 0 bis 18 beträgt; z von 1,5 bis 40 beträgt; q von 0,05 bis 26 beträgt, wobei x, y', y", z und q die mittlere Anzahl von Molen der entsprechenden Einheiten pro Mol des genannten Esters darstellen.

11. Detergenzzusammensetzung nach Anspruch 1, dadurch gekennzeichnet, daß sie 25 Gew,-% bis 100 Gew.-% von einem Ester der Summenformel (CAP)ₓ(EG/PG)_{y'}(DEG)_{y"}(PEG)_{y"'}(T)_{z}(SIP)_{q} umfaßt, worin (CAP) ein Gemisch der genannten endverkappenden Einheiten i) darstellt; (EG/PG) für die genannten Oxyethylenoxy- und Oxy-1,2-propylenoxy-Einheiten ii) steht; (DEG) die genannten Di(oxyethylen)oxy-Einheiten iii) bedeutet; (PEG) die genannten Poly(oxyethylen)oxy-Einheiten iv) darstellt; (T) die genannten Terephthaloyl-Einheiten v) bezeichnet; (SIP) für die Natriumsalzform der genannten 5-Sulfoisophthaloyl-Einheiten vi) steht; x 2 ist; y' von 0,5 bis 66 beträgt; y" von 0 bis 50 beträgt; y"' von 0 bis 50 beträgt; y' + y" +y"' zusammen von 0,5 bis 66 betragen; z von 1,5 bis 40 beträgt; q von 0,05 bis 26 beträgt, wobei x, y', y", y"', z und q die mittlere Anzahl von Molen der entsprechenden Einheiten pro Mol des genannten Esters darstellen.

12. Detergenzzusammensetzung nach Anspruch 1, welche ferner ein zuvor ausgebildetes Peroxysäurebleichmittel umfaßt.

13. Detergenzzusammensetzung nach Anspruch 1, welche ferner 1% bis 20% von einem Persauerstoffbleichmittel und 0,5% bis 20% von einem Bleichmittelaktivator umfaßt.

14. Detergenzzusammensetzung nach Anspruch 13, wobei das genannte Persauerstoffbleichmittel Natriumpercarbonat ist; das genannte detersive grenzflächenaktive Mittel ein Ethoxylat eines primären Alkohol es ist und wobei die genannte Detergenzzusammensetzung ferner mindestens 0,001% an Cellulaseenzym und 0,5% bis 10% von einem eine Farbstoffübertragung verhindernden Mittei umfaßt.

15. Verfahren zum Waschen von Geweben und gleichzeitigem Gewährleisten einer schmutzabweisenden Ausrüstung an diesen Geweben, umfassend das In-Kontakt-Bringen der genannten Gewebe mit einer wäßrigen Waschlauge, welche mindestens 300 ppm von einer Detergenzzusammensetzung nach Anspruch 1 oder Anspruch 14 enthält.

16. Verfahren nach Anspruch 15, worin die genannten Gewebe zwei oder mehreren Kreisläufen unterworfen werden, wovon jeder die geordnete Abfolge der Schritte:
a) In-Kontakt-Bringen der genannten Gewebe mit der genannten wäßrigen Waschlauge in einer herkömmlichen automatischen Waschmaschine oder durch Handwäsche während Zeitspannen, die von 5 min bis zu 1 h reichen;
b) Spülen der genannten Gewebe mit Wasser;
c) Trocknen der genannten Gewebe an der Leine oder durch Schleudern; und
d) Aussetzen der genannten Gewebe unter ein Verschmutzen durch herkömmliches Tragen oder Verwendung im Haushalt;
umfaßt.

17. Wasserlösliches oder wasserdispergierbares oligomeres schmutzabweisendes Mittel, welches mindestens 10% von einem im wesentlichen linearen endverkappten Ester mit einem Molekulargewicht von 500 bis 8000 enthält; welcher Ester, auf molarer Basis, im wesentlichen aus
i) 1 bis 2 Mol von zwei oder mehreren Typen endverkappender Einheiten, welche von der Gruppe ausgewählt sind, die aus:
a) endverkappenden Einheiten der Formel (MO₃S) (CH₂)ₘ(CH₂CH₂O) (RO)ₙ-, worin M ein salzbildendes Kation wie Natrium- oder Tetraalkylammonium darstellt, R für Ethylen oder Propylen oder ein Gemisch hievon steht, m 0 oder 1 ist und n von 0 bis 4 beträgt;
b) Sulfoaroyl-Einheiten der Formel -(O)C(C₆H₄) (SO₃M), worin M ein salzbildendes Kation darstellt;
c) modifizierten Poly(oxyethylen)oxymonoalkylether-Einheiten der Formel XO(CH₂CH₂O)ₖ-, worin X 1 bis 4 Kohlenstoffatome aufweist und k von 1 bis 100 beträgt; und
d) endverkappenden ethoxylierten oder propoxylierten Phenolsulfonat-Einheiten der Formel NaO₃S(C₆H₄) (RO)ₙ- besteht, worin n von 1 bis 5 beträgt und R für Ethylen oder Propylen oder ein Gemisch hievon steht;
ii) 0,5 bis 66 Mol von Einheiten, welche von der Gruppe ausgewählt sind, die aus:
a) Oxyethylenoxy-Einheiten;
b) Oxy-1,2-propylenoxy-Einheiten; und
c) Gemischen aus a) und b) besteht;
iii) 0 bis 50 Mol von Di(oxyethylen)oxy-Einheiten;
iv) 0 bis 50 Mol von Poly(oxyethylen)oxy-Einheiten mit einem Polymerisationsgrad von mindestens 3;
v) 1,5 bis 40 Mol von Terephthaloyl-Einheiten;
vi) 0,05 bis 26 Mol von 5-Sulfoisophthaloyl-Einheiten der Formel -(O)C(C₆H₃) (SO₃M)C(O)- besteht, worin M ein salzbildendes Kation wie ein Alkalimetall- oder Tetraalkylannnoniumion ist;
sodaß die gesamten Einheiten von ii), iii) und iv) von 0,5 bis 66 Mol darstellen und sich nicht mehr als 50 Gew.-% des Esters aus den Poly(oxyethylen)oxy-Einheiten und den endverkappenden modifizierten Poly(oxyethylen)oxy-Einheiten herleiten und die gesamten Einheiten iii) und iv) nicht mehr als 75% der gesamten Einheiten ii), iii) und iv) darstellen.

18. Schmutzabweisendes Mittel nach Anspruch 17, welches ferner ein nichtionisches grenzflächenaktives Mittel für die Verarbeitung umfaßt.

## Revendications

1. Composition détergente, caractérisée en ce qu'elle comprend au moins 1% en poids d'un tensioactif détersif et au moins 0,1% en poids d'un agent de libération des salissures comprenant au moins 10% d'un ester coiffé aux extrémités, essentiellement linéaire, ayant une masse moléculaire s'échelonnant de 500 à 8 000, ledit ester étant essentiellement composé, sur une base molaire:
i) de 1 à 2 moles d'au moins deux types de motifs coiffants d'extrémité choisis dans le groupe constitué par:
a) les motifs coiffants d'extrémité hydroxy-éthane et propanesulfonate éthoxylés ou propoxylés, de formule (MO₃S)(CH₂)ₘ(CH₂CH₂O)(RO)ₙ-, dans laquelle M est un cation formant un sel, tel qu'un sodium ou un tétraalkylammonium, R est un groupe éthylène ou propylène, ou un de leurs mélanges, m est nul ou égal à 1 et n a une valeur de 0 à 4;
b) les motifs sulfoaroyle de formule -(O)C(C₆H₄)(SO₃M), dans laquelle M est un cation formant un sel;
c) les motifs poly(oxyéthylène)oxy-monoalkyléther modifiés de formule XO(CH₂CH₂O)ₖ-, dans laquelle X contient de 1 à 4 atomes de carbone et k a une valeur de 1 à 100; et
d) les motifs coiffants d'extrémité phénolsulfonate éthoxylés ou propoxylés de formule NaO₃S(C₆H₄)-(RO)ₙ-, dans laquelle n a une valeur de 1 à 5 et R est un groupe éthylène ou propylène, ou un de leurs mélanges;
ii) de 0,5 à 66 moles de motifs choisis dans le groupe constitué par:
a) les motifs oxyéthylèneoxy;
b) les motifs oxy-1,2-propylèneoxy; et
c) des mélanges de a) et de b);
iii) de 0 à 50 moles de motifs di(oxyéthylène)oxy;
iv) de 0 à 50 moles de motifs poly(oxyéthylène)oxy ayant un degré de polymérisation d'au moins 3;
v) de 1,5 à 40 moles de motifs téréphtaloyle;
vi) de 0,05 à 26 moles de motifs 5-sulfoisophtaloyle de formule -(O)C(C₆H₃)(SO₃M)C(O)-, dans laquelle M est un cation formant un sel, tel qu'un ion de métal alcalin ou de tétraalkylammonium; de manière que le total des motifs ii), iii) et iv) s'échelonne de 0,5 à 66 moles et que pas plus de 50% en poids de l'ester soit dérivé de motifs poly(oxyéthylène)oxy et de motifs coiffants d'extrémité poly(oxyéthylène)oxy modifiés, et que le total des motifs iii) et iv) ne dépasse pas 75% du total des motifs ii), iii) et iv).

2. Composition détergente selon la revendication 1, caractérisée en ce qu'elle comprend de 25% à 100% en poids d'ester de formule empirique: (CAP)ₓ(EG/PG)_{y'}(T)_{z}(SIP)_{q}, dans laquelle (CAP) représente un mélange desdits motifs coiffants d'extrémité i); (EG/PG) représente lesdits motifs oxyéthylèneoxy et oxy-1,2-propylèneoxy ii); (T) représente lesdits motifs téréphtaloyle v); (SIP) représente la forme de sel de sodium desdits motifs 5-sulfoisophtaloyle vi); x est égal à 2; y' a une valeur de 2 à 27, de préférence de 5; z a une valeur de 2 à 20, de préférence de 5; q a une valeur de 0,4 à 8, de préférence de 1; x, y', z et q représentant le nombre moyen de moles des motifs correspondants par mole dudit ester.

3. Composition détergente selon la revendication 2, comprenant au moins 50% en poids dudit ester ayant une masse moléculaire s'échelonnant de 500 à 5 000.

4. Composition détergente selon la revendication 2, dans laquelle (CAP) représente un mélange de motifs coiffants d'extrémité hydroxy-éthane et propanesulfonate éthoxylés ou propoxylés et de motifs coiffants d'extrémité sulfobenzoyle.

5. Composition détergente selon la revendication 2, dans laquelle (CAP) représente un mélange de motifs coiffants d'extrémité hydroxy-éthane et propanesulfonate éthoxylés ou propoxylés et de motifs poly(oxyéthylène)oxy-monoalkyléther de formule XO(CH₂CH₂O)ₖ-, dans laquelle X contient de 1 à 4 atomes de carbone et k a une valeur de 1 à 100.

6. Composition détergente selon la revendication 2, dans laquelle (CAP) représente un mélange de motifs coiffants d'extrémité sulfobenzoyle et de motifs poly(oxyéthylène)oxy-monoalkyléther modifiés de formule XO(CH₂CH₂O)ₖ-, dans laquelle X contient de 1 à 4 atomes de carbone et k a une valeur de 1 à 100.

7. Composition détergente selon la revendication 2, dans laquelle (CAP) représente un mélange de motifs coiffants d'extrémité hydroxy-éthane et propanesulfonate éthoxylés ou propoxylés et de motifs coiffants d'extrémité phénolsulfonate éthoxylés ou propoxylés de formule NaO₃S(C₆H₄)(RO)ₙ-, dans laquelle n a une valeur de 1 à 5 et R est un groupe éthylène ou propylène, ou un de leurs mélanges.

8. Composition détergente selon la revendication 2, dans laquelle (CAP) représente un mélange de motifs coiffants d'extrémité sulfobenzoyle et de motifs coiffants d'extrémité phénolsulfonate éthoxylés ou propoxylés de formule NaO₃S(C₆H₄)(RO)ₙ-, dans laquelle n a une valeur de 1 à 5 et R est un groupe éthylène ou propylène, ou un de leurs mélanges.

9. Composition détergente selon la revendication 2, dans laquelle (CAP) représente un mélange de motifs poly(oxyéthylène)oxymonoalkyléther modifiés de formule XO(CH₂CH₂O)ₖ-, dans laquelle X contient de 1 à 4 atomes de carbone et k a une valeur de 1 à 100 et de motifs coiffants d'extrémité phénolsulfonate éthoxylés ou propoxylés de formule NaO₃S(C₆H₄)(RO)ₙ-, dans laquelle n a une valeur de 1 à 5 et R est un groupe éthylène ou propylène, ou un de leurs mélanges.

10. Composition détergente selon la revendication 1, caractérisée en ce qu'elle comprend de 25% à 100% en poids d'ester répondant à la formule empirique (CAP)ₓ(EG/PG)_{y'}(DEG)_{y"}(T)_{z}(SIP)_{q}, dans laquelle (CAP) représente un mélange desdits motifs coiffants d'extrémité i); (EG/PG) représente lesdits motifs oxyéthylèneoxy et oxy-1,2-propylèneoxy ii); (DEG) représente lesdits motifs di(oxyéthylène)oxy iii); (T) représente lesdits motifs téréphtaloyle v); (SIP) représente la forme de sel de sodium desdits motifs 5-sulfoisophtaloyle vi); x est égal à 2; y' a une valeur de 2 à 27; y" a une valeur de 0 à 18; z a une valeur de 1,5 à 40; q a une valeur de 0,05 à 26; x, y', y", z et q représentant le nombre moyen de moles des motifs correspondants par mole dudit ester.

11. Composition détergente selon la revendication 1, caractérisée en ce qu'elle comprend de 25% à 100% en poids d'ester répondant à la formule empirique (CAP)ₓ(EG/PG)_{y'}(DEG)_{y"}(PEG)_{y"'}(T)_{z}(SIP)_{q}, dans laquelle (CAP) représente un mélange desdits motifs coiffants d'extrémité i); (EG/PG) représente lesdits motifs oxyéthylèneoxy et oxy-1,2-propylèneoxy ii); (DEG) représente lesdits motifs di(oxyéthylène)oxy iii); (PEG) représente lesdits motifs poly(oxyéthylène)oxy iv); (T) représente lesdits motifs téréphtaloyle v); (SIP) représente la forme de sel de sodium desdits motifs 5-sulfoisophtaloyle vi); x est égal à 2; y' a une valeur de 0,5 à 66; y" a une valeur de 0 à 50; y"' a une valeur de 0 à 50; la somme y'+y"+y"' a une valeur de 0,5 à 66; z a une valeur de 1,5 à 40; q a une valeur de 0,05 à 26; x, y', y", y"', z et q représentant le nombre moyen de moles des motifs correspondants par mole dudit ester.

12. Composition détergente selon la revendication 1, comprenant aussi un agent de blanchiment peracide préformé.

13. Composition détergente selon la revendication 1, comprenant aussi de 1% à 20% d'un agent de blanchiment peroxygéné et de 0,5% à 20% d'un activateur de blanchiment.

14. Composition détergente selon la revendication 13, dans laquelle ledit agent de blanchiment peroxygéné est le percarbonate de sodium, ledit tensioactif détersif est un éthoxylat d'alcool primaire, et dans laquelle ladite composition détergente comprend aussi au moins 0,001% d'enzyme cellulase et de 0,5% à 10% d'un agent inhibant le transfert des teintures.

15. Procédé pour laver le linge et lui conférer en même temps un fini de libération des salissures, comprenant la mise en contact dudit linge avec une liqueur de lessive aqueuse contenant au moins 300 ppm d'une composition détergente selon la revendication 1 ou la revendication 14.

16. Procédé selon la revendication 15, dans lequel ledit linge est soumis à deux cycles au moins, chacun comprenant, dans l'ordre, la séquence d'étapes consistant à:
a) mettre en contact ledit linge avec ladite liqueur de lessive aqueuse, dans un lave-linge classique ou par lavage à la main, pendant des durées allant de 5 minutes à 1 heure;
b) rincer ledit linge avec de l'eau;
c) sécher ledit linge sur la corde à linge ou au sèche-linge; et
d) exposer ledit linge à des salissures par un port normal ou une utilisation domestique.

17. Agent oligomère de libération des salissures soluble dans l'eau ou dispersible dans l'eau, comprenant au moins 10% d'un ester coiffé aux extrémités, essentiellement linéaire, ayant une masse moléculaire s'échelonnant de 500 à 8 000, ledit ester étant essentiellement composé, sur une base molaire:
i) de 1 à 2 moles d'au moins deux types de motifs coiffants d'extrémité choisis dans le groupe constitué par:
a) les motifs coiffants d'extrémité de formule (MO₃S)(CH₂)ₘ(CH₂CH₂O)(RO)ₙ-, dans laquelle M est un cation formant un sel, tel qu'un sodium ou un tétraalkylammonium, R est un groupe éthylène ou propylène, ou un de leurs mélanges, m est nul ou égal à 1 et n a une valeur de 0 à 4;
b) les motifs sulfoaroyle de formule -(O)C(C₆H₄)(SO₃M), dans laquelle M est un cation formant un sel; et
c) les motifs poly(oxyéthylène)oxy-monoalkyléther modifiés de formule XO(CH₂CH₂O)ₖ-, dans laquelle X contient de 1 à 4 atomes de carbone et k a une valeur de 1 à 100;
d) les motifs coiffants d'extrémité phénolsulfonate éthoxylés ou propoxylés de formule NaO₃S(C₆H₄)(RO)ₙ-, dans laquelle n a une valeur de 1 à 5 et R est un groupe éthylène ou propylène, ou un de leurs mélanges;
ii) de 0,5 à 66 moles de motifs choisis dans le groupe constitué par:
a) les motifs oxyéthylèneoxy;
b) les motifs oxy-1,2-propylèneoxy; et
c) des mélanges de a) et de b);
iii) de 0 à 50 moles de motifs di(oxyéthylène)oxy;
iv) de 0 à 50 moles de motifs poly(oxyéthylène)oxy ayant un degré de polymérisation d'au moins 3;
v) de 1,5 à 40 moles de motifs téréphtaloyle;
vi) de 0,05 à 26 moles de motifs 5-sulfoisophtaloyle de formule -(O)C(C₆H₃)(SO₃M)C(O)-, dans laquelle M est un cation formant un sel, tel qu'un ion de métal alcalin ou de tétraalkylammonium; de manière que le total des motifs ii), iii) et iv) s'échelonne de 0,5 à 66 moles et que pas plus de 50% en poids de l'ester soit dérivé de motifs poly(oxyéthylène)oxy et de motifs coiffants d'extrémité poly(oxyéthylène)oxy modifiés, et que le total des motifs iii) et iv) ne dépasse pas 75% du total des motifs ii), iii) et iv).

18. Agent de libération des salissures selon la revendication 17, comprenant aussi un agent de traitement de type tensioactif non ionique.
